# EUROPEAN PATENT SPECIFICATION

(11) **EP 4 005 334 B1**
(45) Date of publication and mention of the grant of the patent: **28.02.2024**
(21) Application number: 20757774.3
(22) Date of filing: 03.08.2020
(51) Int. Cl.: H04W 76/27, H04W 48/18, H04W 12/00, H04W 88/06

(54) **SYSTEMS AND METHODS FOR HANDLING A RADIO RESOURCE CONTROL INACTIVE STATE**
SYSTEME UND VERFAHREN ZUR BEHANDLUNG EINES INAKTIVEN ZUSTANDS EINER FUNKRESSOURCE
SYSTÈMES ET PROCÉDÉS POUR GÉRER UN ÉTAT INACTIF DE CONTRÔLE DE RESSOURCES RADIO

(30) Priority: 13.08.2019 US 201962886157 P; 13.08.2019 US 201962886167 P
(43) Date of publication of application: 01.06.2022
(73) Proprietor: Google LLC, Mountain View, CA 94043 (US)
(72) Inventor: WU, Chih-Hsiang, Mountain View, CA 94043 (US)
(74) Representative: Cupitt, Philip Leslie
(86) International application number: PCT/US2020/044696
(87) International publication number: WO 2021/030084

(56) References cited:
- WO-A1-2018/029621
- WO-A1-2018/119119
- US-A1- 2018 220 486
- US-A1- 2019 037 635

## Description

### CROSS REFERENCE TO RELATED APPLICATIONS

This application claims priority to and the benefit of U.S. Provisional Patent Application No. 62/886,157, which was filed on August 13, 2019 and is entitled "Systems and Methods for Handling a Radio Resource Control Inactive State," and this application claims priority to and the benefit of U.S. Provisional Patent Application No. 62/886,167, which was filed on August 13, 2019 and is entitled "Systems and Methods for Handling a Radio Resource Control Inactive State."

### FIELD OF THE DISCLOSURE

This disclosure relates to wireless communications and, more particularly, to resuming wireless communications between a user equipment (UE) that is in an inactive state and a wireless communication system across different Radio Access Technologies (RATs).

### BACKGROUND

The background description provided within this document is for the purpose of generally presenting the context of the disclosure.

In a wireless communication system, a first base station supporting a first type of Radio Access Technology ("RAT1") services a User Equipment (UE) by, *inter alia,* utilizing a respective protocol for controlling radio resources corresponding to RAT1. The protocol for controlling radio resources may be, for example, a Radio Resource Control (RRC) protocol utilized by 4G, 5G, 6G, or later-generation wireless communication systems, or may be another suitable protocol. The first base station supporting RAT 1 (which, for ease of reading, this document interchangeably refers to as "the first RAT1 base station" or "the RAT1 base station") and the UE establish a connection via which data payload is transmitted between the UE and the first RAT1 base station, e.g., wirelessly. Upon establishing the connection via the first RAT1 base station, the UE is in a connected state of the RAT1 protocol for controlling radio resources, e.g., the UE is in a "CONNECTED-RAT1" state. The first RAT1 base station maintains a context of the UE, where the context of the UE includes configuration and other information associated with the connection of the UE with the wireless communication system via the first RAT base station. The context of the UE may be included in or implemented as an Access Stratum (AS), for example.

At some point in time, the first RAT1 base station detects that below-threshold or no-data activity for the UE has occurred over some interval of time over the established connection. Upon this detection, the first RAT1 base station instructs the UE to enter into an inactive state of the RAT1 protocol, e.g., to enter into an "INACTIVE-RAT1" state. In some cases, the first RAT1 base station starts a timer with respect to resuming its connection with the UE, for example, in the event that the first RAT1 base station again detects data activity for the UE prior to the expiration of the timer. At some point in time thereafter, such as when the UE has moved into a different coverage area and has payload data to transmit to the system, the UE (which is in the INACTIVE-RAT1 state) selects or reselects a second base station for service, where the second base station supports a different, type of Radio Access Technology ("RAT2") than the type of RAT supported by the first base station. That is, the second base station is an "inter-RAT" base station with respect to the first base station. For example, the first RAT1 base station may be a EUTRA (Evolved Universal Terrestrial Radio Access, or E-UTRA) base station and the second RAT2 base station may be an NR (New Radio) base station, or vice versa. The first RAT1 base station and the second RAT2 base station may be respectively included in different Radio Access Networks (RANs), or may be included in an integral RAN that supports multiple RATs, for example.

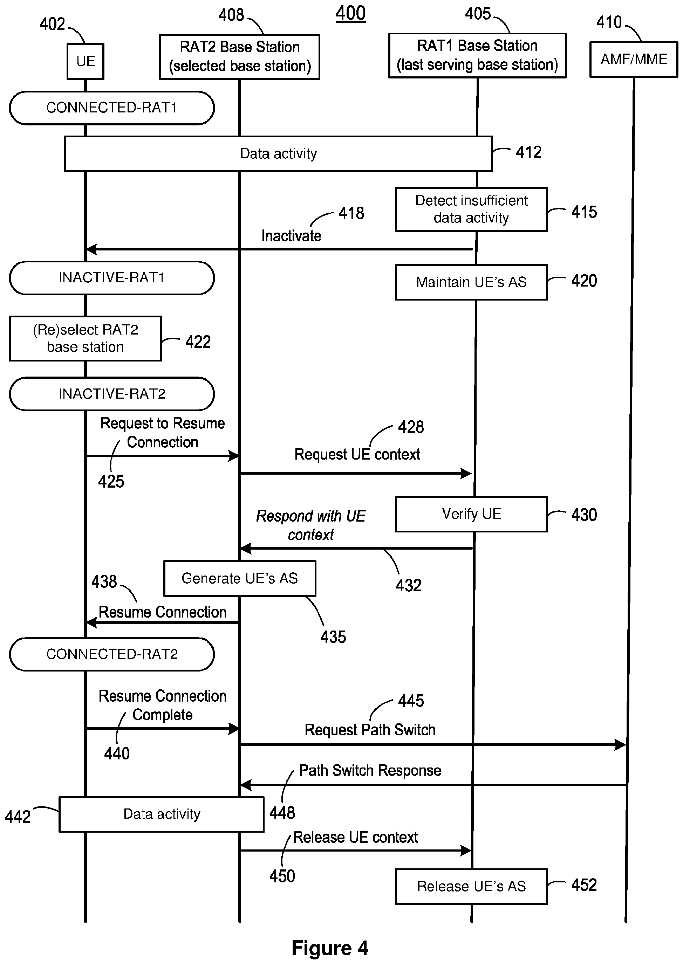

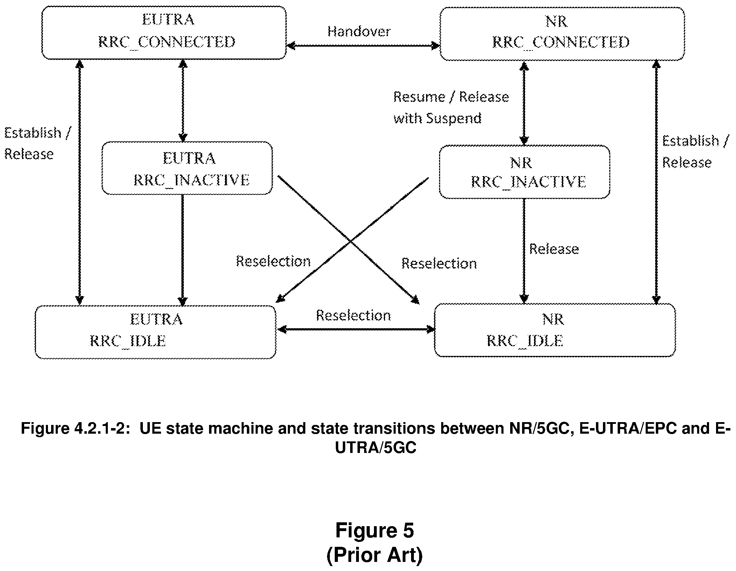

At any rate, known techniques require that upon a UE's selection or reselection of an inter-RAT base station while the UE is in an inactive state (e.g., upon the UE selecting a RAT2 base station while the UA is in an inactive state corresponding to RAT1, e.g., INACTIVE-RAT1), the UE enters into an idle state of a respective protocol for controlling radio resources associated with selected, inter-RAT base station (e.g., the UE enters into an idle state corresponding to RAT2, e.g., IDLE-RAT2). *See e.g.,* 3GPP TS 38.331 v15.5.1, "Figure 4.2.1-2: UE State machine and state transitions between NR/5GC, E-UTRA/EPC and E-UTRA/5GC," a copy of which is reproduced in FIG. 5.

Based on its selection of the inter-RAT base station and resulting entrance into the IDLE-RAT2 state, the UE initiates a new connection with the wireless communication system via the second RAT2 base station, which causes the second RAT2 base station to create a second instance of the context or Access Stratum (AS) of the UE, and populate the second instance of the context/AS with configuration information associated with the connection between the UE and the second RAT2 base station. In particular, in addition to setting up the initial connection, the second RAT2 base station and the UE perform additional procedures associated with configuring the UE for utilizing the connection (such as initial security activation, UE capability transfer, RRC connection reconfiguration, etc.), and the second RAT2 base station stores information gathered during these procedures and the locally-accessible second instance of the context/AS.

Generally speaking, although the establishment of the connection between the UE and the selected, second RAT2 base station is contextually a resumption of the previous connection of the UE and the wireless communication system via the first RAT1 base station resulting from an inter-RAT selection (or reselection) of the second RAT2 base station while the UE is in the INACTIVE-RAT1 state, the establishment of the connection between the UE and the system via the selected, second RAT2 base station follows the procedures for establishing a new, initial connection between the UE and the wireless communication system via the second RAT2 base station. That is, based on an inter-RAT selection or reselection while the UE is in the INACTIVE-RAT 1 state and resulting entrance into the IDLE-RAT2 state, the UE and the second RAT2 base station perform the same procedures that they would utilize for setting up an initial, new connection between the UE and the wireless communication system via the second RAT2 base station.

Unfortunately, with these known techniques for transitioning the service of a UE between inter-RAT base stations while a UE is in the INACTIVE-RAT1 state, the first RAT1 base station is unaware of the UE's selection/reselection of the second RAT2 base station. Consequently, the first RAT1 base station needlessly maintains the first instance of the UE's context or AS associated with the first RAT1 base station (e.g., until the associated timer expires, until audits discover the needlessly maintained UE context, etc.), thereby preventing the first RAT1 base station from using the tied-up resources (such as memory storage, timers, CPU processing, and the like) for other purposes. Further, the UE and the second RAT2 base station follow the procedures for setting up an initial, new connection even though the UE is part of an existing connection with the system and has entered into the IDLE-RAT2 state merely due to the (re)selection between inter-RAT base stations. As such, the UE and the second RAT2 base station unnecessarily utilize significant amounts of respective resources (messaging, memory, processing, network bandwidth, etc.) to provide re-connection or continuity of service to the UE. Still further, because the UE must perform these "new" connection procedures with the second RAT2 base station, the UE is not able to transmit payload data until the completion of such procedures thereby adding unnecessary latency and delay to the UE transmitting and/or receiving payload data via the second RAT2 base station.

WO 2018/029621 A1 relates to a method for resuming a radio connection for a wireless device that is moving from a first cell with a first RAT to a second cell with a second RAT, while being in an inactive state. In a message to resume, named RRC Connection Resume Request, the UE provides a Resume ID, establishment cause and short Message Authentication Code-Integrity (MAC-I) to the eNB. The first network may calculate a MAC-I to verify an identity of the wireless device. Input for short-MAC-I calculation is based on RAT of source eNB.

WO 2018/119119 A1 relates to techniques used to enable UE to switch between RATs while transitioning from an inactive state to an active state. US 2018/0220486 A1 relates to an RRC connection resume method of a wireless communication system and, more particularly, relates to RRC resume procedures for a wireless communication system related to a Narrow-Band Internet of Things (NB-IoT). US 2019/0037635 A1 relates to methods and apparatuses for recovering a RRC connection in a wireless communication system.

### SUMMARY

Rather than transitioning a UE from an INACTIVE-RAT1 state of the first RAT1 protocol for controlling radio resources into an IDLE-RAT2 state of the second RAT2 protocol for controlling radio resources, upon (re)selection of a base station of the second RAT, or for some other reason, the UE transitions from the INACTIVE-RAT1 state of the first RAT1 protocol into an INACTIVE-RAT2 state of the second RAT2 protocol. Subsequently, when the UE has payload data to transmit to the system, the UE merely initiates a procedure to resume its connection (e.g., to reconnect) with the wireless communication system via the second, RAT2 base station, for example, by sending, to the second RAT2 base station, a request to resume the connection between the UE and the system (e.g., an *RRCConnectionResumeRequest* message when RAT2 is EUTRA, an *RRCResumeRequest* message when RAT2 is NR, etc.). Based on the reception of the request of the UE to resume its connection with the system, the second RAT2 base station queries the first RAT1 base station to obtain or otherwise determine configuration and/or other context information of the UE. The first RAT1 base station obtains configuration and/or other context information associated with the connection of the UE with the system via the first RAT 1 base station from the UE context stored at or accessible to the first RAT1 base station, and the first RAT1 base station and/or the second RAT2 base station may determine, based on the accessed, stored UE context information, at least a respective portion of a configuration and/or other context information associated with the resumption of the connection of the UE with the system via the second RAT2 base station. The second RAT2 base station resumes the connection of UE and the system based on the obtained/determined configuration information and/or other context information, thereby causing the UE to enter into a CONNECTED-RAT2 state of the second RAT2 protocol. That is, the UE and the second RAT2 base station resume the connection of the UE and the system based on the obtained context information associated with the previous, established connection of the UE and the system via the first RAT1 base station.

Generally, the techniques disclosed within this document apply to wireless communication systems having one or more Radio Access Networks that support various different types of Radio Access Technologies (RATs), e.g., via unlicensed portions of the radio spectrum, such as the fourth generation of mobile or cellular data technology ("4G"), 4G in accordance with the Long-Term Evolution standard ("4G-LTE"), the fifth generation of mobile or cellular data technologies (referred to as "5G"), 5G New Radio ("NR" or "NR-U"), 5G Evolved Universal Terrestrial Radio Access ("EUTRA" or "E-UTRA"), the sixth generation of mobile or cellular data technologies ("6G"), etc. The various different types of radio access technologies may be connected to any suitable type of Core Network ("CN"), such as an Evolved Packet Core Network ("EPC"), a generation of Core Network earlier than EPC (such as 5GC), a generation of Core Network later than 5GC, etc.

The invention is defined by the appended independent claims. Further embodiments of the invention are defined by the appended dependent claims. According to a first aspect, the present invention provides a method in a base station as defined in independent claim 1. According to a second aspect, the present invention provides a system as defined by independent claim 15.

The techniques disclosed within this document provide significant advantages over known techniques. For example, because a resume connection procedure requires a fewer number of messages to be transmitted between the UE and the base stations of the wireless communication system as compared with the number of messages required by a new, initial connection establishment procedure, the disclosed techniques shorten the time delay between when the LTE has payload data to transmit and when the LTE is able to transmit the payload data via the resumption of its connection with the system via the second RAT2 base station. Fewer messages also result in less network traffic, decreased bandwidth usage, and other system benefits. Further, because the first RAT1 base station is aware of the re-connection of the UE with the system via the second RAT2 base station, the base stations can free up resources (such as memory, timers, CPU processing, etc.) more quickly for other uses, as compared to known techniques.

### BRIEF DESCRIPTION OF THE DRAWINGS

FIG. 1 depicts an example wireless communication system in which devices such as base stations and User Equipments (UEs) communicate data, and that supports the handling of UEs in a radio resource control inactive state, in accordance with at least some of the principles and techniques disclosed in this document.
FIG. 2 depicts a more detailed block diagram of an example base station included in the wireless communication system of FIG. 1.
FIG. 3 is an example state diagram of a User Equipment (UE) with respect to different protocols of different types of Radio Access Technologies (RATs) of a wireless communication system, in accordance with at least some of the principles and techniques disclosed within this document.
FIG. 4 is an example message flow diagram for handling the resumption of a connection of a UE that is in an inactive state of a first type of RAT, with a wireless communication system via a base station of a different type of RAT in accordance with at least some of the principles and techniques disclosed within this document.
FIG. 5 is a prior art state diagram of a UE with respect to different protocols of different types of RATs of a wireless communication system.
FIG. 6 is a flow diagram of an example method in a UE that supports multiple RATs, in accordance with at least some of the principles and techniques disclosed within this document.
FIG. 7 is a flow diagram of another example method in a UE that supports multiple RATs, in accordance with at least some of the principles and techniques disclosed within this document.
FIG. 8 is a flow diagram of an example method, in a base station that is selected by a UE in an inactive state, for resuming a connection between the UE and a wireless communication system via the selected base station, in accordance with at least some of the principles and techniques disclosed within this document.
FIG. 9 is a flow diagram of an example method, in a base station of a first type of RAT via which a UE is or was connected to a wireless communication system, for resuming the connection between the UE and the wireless communication system via another base station of a different type of RAT, in accordance with at least some of the principles and techniques disclosed within this document.

### DETAILED DESCRIPTION

The systems, methods, and techniques described within this document apply to the handling of a UE while the UE is in an inactive state of a first radio resource protocol corresponding to a first RAT. While the UE is in the inactive state of the first RAT (RAT1), the UE may select or reselect a base station that supports a second RAT (RAT2) different than the first RAT(e.g., an inter-RAT base station), and upon the (re)selection of the second, RAT2 base station, or for some other reason, the UE may transition from the INACTIVE-RAT 1 state of the first radio resource protocol corresponding to RAT 1 into an INACTIVE-RAT2 state of a second radio resource protocol corresponding to RAT2. Subsequently, when the UE has control-plane and/or user-plane payload data to transmit to the system, the UE may initiate a procedure to resume its connection (e.g., to reconnect) with the wireless communication system via the second, RAT2 base station, for example, by sending, to the second RAT2 base station, a request to resume the connection between the UE and the system. Based on the reception of the request of the UE to resume its connection with the system, the second RAT2 base station may query the first RAT1 base station to obtain or otherwise determine configuration and/or other context information of the UE. The first RAT1 base station may obtain configuration and/or other context information associated with the connection of the UE with the system via the first RAT1 base station from the UE context stored at or accessible to the first RAT1 base station, and the first RAT1 base station and/or the second RAT2 base station may determine, based on the accessed, stored UE context information, at least a respective portion of configuration and/or other context information associated with the resumption of the connection of the UE with the system via the second RAT2 base station. The second RAT2 base station and the UE may resume the connection of UE and the system based on the obtained/determined configuration information and/or other context information, thereby causing the UE to enter into a CONNECTED-RAT2 state of the second RAT2 protocol. That is, the UE and the second RAT2 base station may resume the connection of the UE and the system based on the obtained context information associated with the previous, established connection of the UE and the system via the first RAT1 base station.

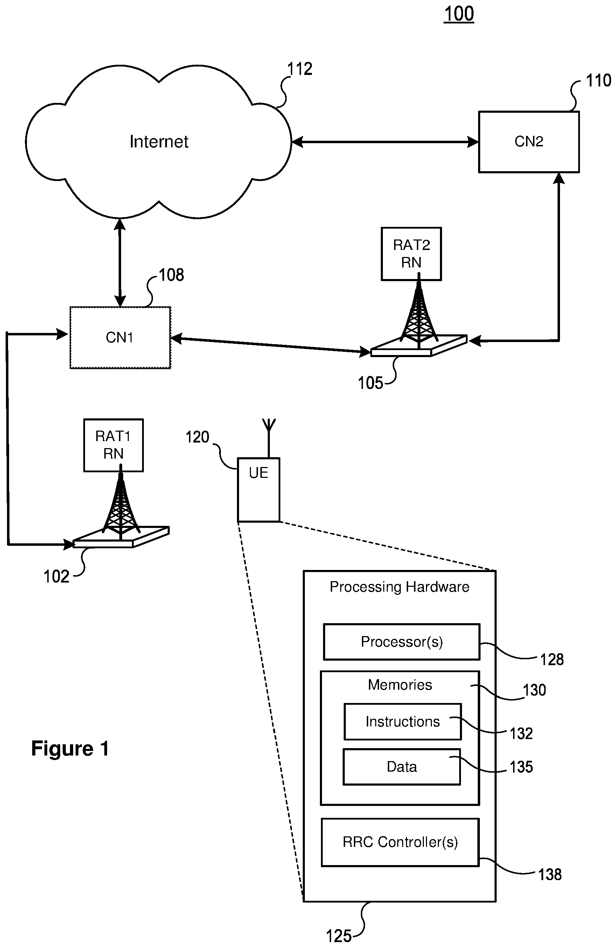

FIG. 1 depicts an example wireless communication system 100 in which devices such as base stations and user equipments (UEs) communicate, and that supports the handling of UEs in an inactive state of a protocol for controlling radio resources in accordance with one or more of the methods, principles, and/or techniques disclosed in this document. As illustrated in FIG. 1, the system 100 includes a base station 102 that supports a first Radio Access Network (RAN) of a first type of Radio Access Technology (RAT1), and includes a base station 105 that supports a second RAN of a second type of Radio Access Technology (RAT2). For example, RAT1 may be NR and RAT2 may be EUTRA, or vice versa. At least some of the RANs supported by the base stations 102, 105 may utilize unlicensed frequency bands, in some cases. Generally speaking, a base station that supports an NR RAT operates as a gNodeB (gNB), and a base station that supports an E-UTRA RAT and connects to a 5GC Core Network (E-UTRA/5GC) operates as a next generation evolved Node B (ng-eNB). A base station that supports an E-UTRA RAT and connects to an EPC Core Network (E-UTRA/EPC) operates as an evolved NodeB (eNB), and a base station that supports both E-UTRA/EPC and E-UTRA/5GC operates as both an ng-eNB and an eNB.

Of course, various base stations of the system 100 may support other types of Radio Access Technologies instead of or in addition to NR and/or EUTRA. Indeed, in some arrangements (not shown in FIG. 1), a single physical site or location (e.g., a geographical location, tower, mounting system, etc.) may support multiple base stations and/or multiple RANs of multiple different types of RATs, and as such, respective components of the multiple base stations and/or multiple RANs may be physically co-located at the same physical site. Further, in some embodiments, at least some of the method, techniques, and principles described within this document apply to multiple base stations or multiple RANs of different type of RATs which may share one or more common components, where the shared common components may include logical and/or physical components.

As illustrated in FIG. 1, each base station 102, 105 may communicatively connect to one or more respective CNs 108, 110, each of which in turn communicatively connects to the Internet 112 and/or to any number of other private or public networks. CN1 108 and CN2 110 may be the same or different types of core networks. For example, CN1 108 may be a 5GC core network and CN2 110 may be an EPC core network, or vice versa. In other examples, both CN1 108 and CN2 110 may be 5GC, or both CN1 108 and CN2 110 may be EPC. The system 100 supports different types of RANs (e.g., RANs of different types of RATs) being connected to different and/or multiple types of CNs. For example, an NR RAN may connect to a 5GC core network, an E-UTRA RAN may connect to an EPC core network, an E-UTRA RAN may connect to a 5GC core network, etc. Indeed, although FIG. 1 illustrates two base stations 102, 105 respectively supporting two types of RANs (RAT1, RAT2) that are connected to two types of CNS 108, 110, the system 100 may be configured with any number (e.g., one or more) of base stations supporting any number (e.g., one or more) types of RANs, each of which is respectively connected to any number (e.g., one or more) of types of CNs.

A User Equipment (UE) 120, which can be any suitable device capable of wireless communications via multiple types of RANs, may communicatively connect with the wireless communication system 100 via base stations 102, 105. The UE 102 includes processing hardware 125 that can include one or more processors (e.g., CPUs) 128 and one or more non-transitory, tangible, computer-readable memories 130 storing instructions 132 that the one or more processors 128 read and/or execute. Particularly, the instructions 132 include instructions for handling the UE in a radio resource control inactive state in accordance with one or more of the methods, principles, and techniques disclosed in this document.

In an example implementation of the UE 120, the computer-executable instructions 132 are executable by the one or more processors 128 to perform any one or more of the portions of the described methods and/or techniques. The memories 130 may store data 135 utilized to perform any one or more of the portions of the described methods and/or techniques. In some implementations, the one or more processors 128 execute the computer-executable instructions 132 to operate in conjunction with firmware and/or other portions of the processing hardware 125 to perform any one or more of the portions of the described methods and/or techniques.

The example processing hardware 125 includes one or more Radio Resource Control (RRC) controllers 138 which are used to communicate Radio Frequency (RF) signals via radios in accordance with different types of RATs. In some embodiments, the UE 120 includes a single RRC controller 138 configured to communicate in accordance with multiple different types of RATs, and in some embodiments, the UE 120 includes multiple, different RRC controllers 138, each of which is respectively configured to communicate in accordance with only a single, different type of RAT.

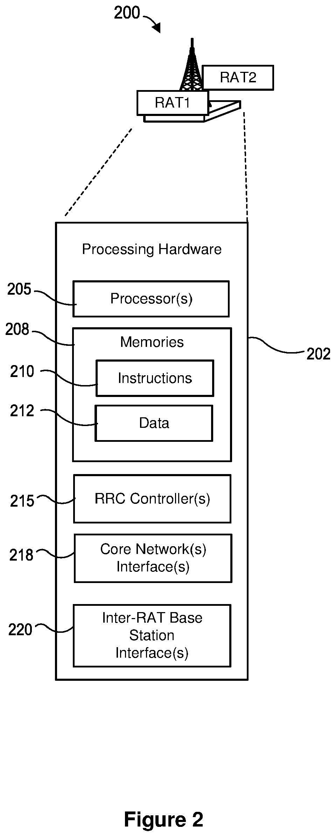

FIG. 2 depicts a more detailed block diagram of an example base station 200 which may be included in the example wireless communication system 100 of FIG. 1. For example, the example base station 200 may be implemented as the base station 102 and/or as the base station 105 of FIG. 1. As shown in FIG. 2, the base station 200 includes example processing hardware 202 that includes one or more processors 205 and one or more tangible, non-transitory computer-readable memories 208 storing computer-executable instructions 210. Particularly, the instructions 210 include instructions for handling UEs (e.g., the UE 120 and/or other UEs) that are in a radio resource control inactive state in accordance with one or more of the methods, principles, and techniques disclosed in this document.

In an implementation, the computer-executable instructions 210 are executable by the one or more processors 205 to perform any one or more of the portions of the described methods and/or techniques. The memories 208 store data 212 utilized to perform any one or more of the portions of the described methods and/or techniques. In some implementations, the one or more processors 205 execute the computer-executable instructions 210 to operate in conjunction with firmware and/or other portions of the processing hardware 202 to perform any one or more of the portions of the described methods and/or techniques.

The example processing hardware 202 of the base station 200 includes one or more Radio Resource Control (RRC) controllers 215 that are used to communicate Radio Frequency (RF) signals with UEs in accordance with one or more types of RATs. In some embodiments, a single RRC controller of the one or more RRC controllers 215 supports only one type of RAT, and in some embodiments, a single RRC controller of the one or more RRC controllers 215 supports multiple types of RATs. The example processing hardware 202 also includes one or more core network interfaces 218 that are used to connect with and communicate digital signals to/from a respective core network (e.g., CN1 108, CN2 110). In some embodiments, each particular CN interface 218 connects with only a single, different type of CN, and in some embodiments, a single one of the one or more core network interfaces 218 connects with multiple types of CNs.

The example processing hardware 202 includes one or more inter-RAT base station interfaces 220 via which the processing hardware 202 may communicate with processing hardware of another base station within the system 100, where the other base station supports a different type of RAT than the type of RAT supported by the base station 200. That is, the base station 200 and the other base station are inter-RAT base stations. For example, if the base station 200 supports RAT1 (e.g., via its RRC controller(s) 215 and other components), the base station 200 may utilize one of the inter-RAT base station interfaces 220 to communicate with another base station (not shown) that supports RAT2, e.g., via one or more wired and or wireless networks interconnecting the base station 200 and the other base station. In another example, if the base station 200 supports both RAT1 and RAT2, at least one of the one or more inter-RAT base station interfaces 220 may allow RAT1 components of the base station 200 to communicate with RAT2 components of the base station 200.

Note that other base stations within the wireless environment 100 may include respective instances of the processing hardware 202 to support the handling of UEs (e.g., the UE 120 and/or other UEs) that are in a radio resource control inactive state in accordance with one or more of the methods, principles, and techniques disclosed in this document.

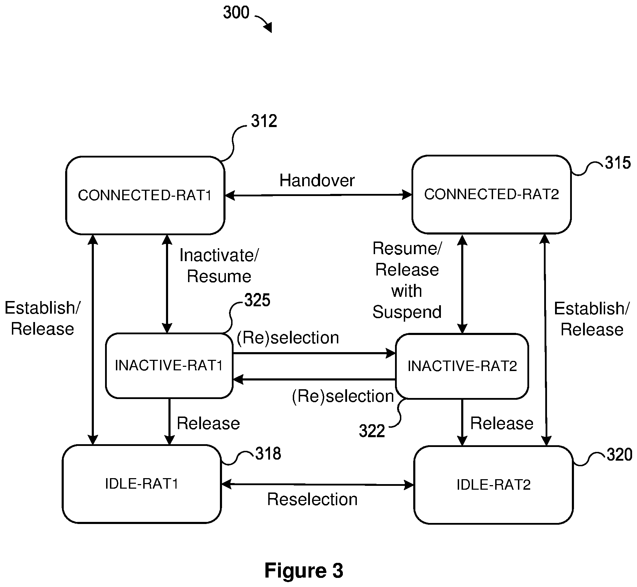

FIG. 3 is an example state diagram 300 of a User Equipment (UE), such as the UE 120 of FIG. 1, with respect to multiple types of Radio Access Networks (RANs) of a wireless communication system, such as the wireless communication system 100 of FIG. 1. Each of the states 312, 315, 318, 320, 322, and 325 is associated with a respective protocol for controlling radio resources of a respective type of RAT (Radio Access Technology) and corresponding RAN. For example, as illustrated in FIG. 1, RAT1 may correspond to NR and RAT2 may correspond to E-UTRA/EPC or to E-UTRA/5GC, RAT2 may to correspond to NR and RAT1 may correspond to E-UTRA/EPC or to E-UTRA/5GC, etc.

Referring to FIG. 3, in an example scenario in which the UE and the wireless communication system have established a connection via a base station that supports RAT1 (e.g., a "RAT1 base station"), the UE is in a CONNECTED-RAT1 state 312. While the UE is in the CONNECTED-RAT 1 state 312, the UE or the RAT1 base station determines that the UE is to handover to an inter-RAT target base station that supports RAT2 (e.g., a "RAT2 base station"). The target RAT2 base station may be physically disposed at the same or a different physical location at which the RAT1 base station is disposed. Upon completion of the inter-RAT handover, the connection between the UE and the system is maintained via the RAT2 base station, and the UE enters into the CONNECTED-RAT2 state 315.

In another example scenario, while the UE is in the CONNECTED-RAT1 state 312, the UE or the RAT1 base station releases the connection. Consequently, and as shown in FIG. 3, the UE enters into the IDLE-RAT1 state 318. Conversely, in an example scenario in which the UE is in the IDLE-RAT1 state 318, the RAT1 base station and the UE establish a new connection between the UE and the wireless communication system, and accordingly the UE enters into the CONNECTED-RAT1 state 312. Similar state transitions for handover, release connection, and establish connection scenarios may occur when the UE is in the CONNECTED-RAT2 state 315 or when the UE is in the IDLE-RAT2 state 320.

In yet another example scenario while the UE is in the CONNECTED-RAT1 state 312, RAT1 is E-UTRA, and the RAT1 base station detects that below-threshold or no data activity has occurred between the UE and the RAT1 base station over some interval of time. Upon this detection, the RAT1 base station sends a command to the UE instructing the UE to enter into an INACTIVE- RAT1 state 325. Optionally, the RAT1 base station may also set a timer with respect to resuming its connection with the UE, e.g., in the event that the RAT1 base station again detects sufficient data activity for the UE prior to the expiration of the timer. If the RAT1 base station again detects sufficient data activity for the UE, e.g., prior to the expiration of the timer, the RAT1 base station sends a paging message to the UE, thereby causing the UE to initiate a resume connection procedure to thereby return to the CONNECTED-RAT1 state 312 and resume the connection of the UE with the wireless communication system via the RAT1 base station. On the other hand, upon expiration of the timer or after a predetermined time interval has elapsed and sufficient data activity between the RAT1 base station and the UE has not resumed or been detected, the RAT1 base station may instruct the UE to release the connection and enter into the IDLE-RAT1 state 318. Alternatively, the UE may autonomously enter into the IDLE-RAT1 state 318 from the INACTIVE-RAT1 state 325, e.g., after some predetermined time interval has elapsed, upon expiration of a timer started by the UE upon initiating a resume connection procedure at the UE, upon (re)selecting a cell during a resume connection procedure, etc.

In another example scenario, RAT2 is NR, the UE is connected with the wireless communication system via a RAT2 base station, and the UE is in the corresponding CONNECTED-RAT2 state 315. In this example scenario, the RAT2 base station detects that below-threshold or no data activity has occurred between the UE and the RAT2 base station over some interval of time. Consequently, the RAT2 base station sends a release-with-suspend command to instruct the UE to thereby cause the UE to enter into the INACTIVE-RAT2 state 322. Optionally, the RAT2 base station may also set a timer with respect to resuming the connection with the UE, in the event that the RAT2 base station again detects sufficient data activity for the UE prior to the expiration of the timer. When the RAT2 base station again detects sufficient data activity for the UE, the RAT2 base station sends a resume connection command to the UE, thereby causing the UE to return to the CONNECTED-RAT2 state 315. On the other hand, upon expiration of the timer, or after a predetermined time interval has elapsed without the RAT2 base station detecting sufficient data activity, the UE enters into the IDLE-RAT2 state 320 from the INACTIVE-RAT2 state 322, e.g., upon receiving a release from the RAT2 base station, or autonomously. Alternatively, the UE may autonomously enter into the IDLE-RAT2 state 320 from the INACTIVE-RAT2 state 322, e.g., after some predetermined time interval has elapsed, upon expiration of a timer started by the UE upon initiating a resume connection procedure at the UE, upon (re)selecting a cell during a resume connection procedure or while the timer is running, etc.

In some scenarios, while the UE is in an inactive state of a particular type of RAT (e.g., the INACTIVE-RAT1 state 325 or the INACTIVE RAT2 state 322), the UE selects or re-selects an inter-RAT base station (e.g., a base station of another type of RAT) via which the UE may resume its connection with the wireless communication system. Upon (re)selection of the inter-RAT base station, the UE enters into the inactive state corresponding to the other type of RAT. For example, as shown in FIG. 3, when the UE is in the INACTIVE-RAT1 state 325 and selects a RAT2 base station, the UE enters into the INACTIVE-RAT2 state 322, and when the UE is in the INACTIVE-RAT2 state 322 and selects a RAT1 base station, the UE enters into the INACTIVE-RAT1 state 325. Subsequently, upon resuming its connection with the system via the selected RAT (the details of which are described in later sections of this document), the UE returns to a connected state of the selected RAT. For example, when the UE is in an INACTIVE-RAT1 state 325 and resumes its connection with the system via a RAT1 base station, the UE transitions from the INACTIVE RAT1 state 325 into the CONNECTED-RAT1 state 312, and when the UE is in an INACTIVE-RAT2 state 322 and resumes its connection with the system 100 via a RAT2 base station, the UE transitions from the INACTIVE RAT2 state 322 into the CONNECTED-RAT2 state 315.

FIG. 4 is an example message flow diagram 400 between a UE 402 and various components 405, 408, 410 of a wireless communication system illustrating an example scenario in which, *inter alia,* the UE 402 is in an inactive state with respect to a first base station 405 that supports a first type of RAT (RAT1), and in which the UE 402 resumes its connection with the wireless communication system via an inter-RAT base station 408 supporting a second, different type of Radio Access Technology (RAT2), in accordance with the methods, principles, and techniques disclosed within this document. In an embodiment, the message flow diagram 400 may be implemented in the wireless communication system 100 of FIG. 1. For example, the UE 402 may be the UE 120 of FIG. 1, the first RAT1 base station 405 may be the base station 102 of FIG. 1, and the second RAT2 base station 408 may be the base station 105 of FIG. 1.

FIG. 4 also depicts a mobility manager component 410, which may be included in one of the Core Networks 108, 110 of the system 100 of FIG. 1. In arrangements in which the first RAT1 base station 405 and the second RAT2 base station 408 are connected to a 5GC Core Network, the mobility manager component 410 may be an Access and Mobility Management Function (AMF), and in arrangements in which the first RAT1 base station 405 and the second RAT2 base station 408 are connected to an EPC Core Network, the mobility manager component 410 may be a Mobility Management Entity (MME). Further, the UE protocol states depicted within FIG. 4 using oval shapes may correspond to the UE's protocol states depicted within FIG. 3, in some implementations.

At the top of the example message flow diagram 400, the UE 402 is in a CONNECTED-RAT1 state, and the UE 402 and the RAT1 base station 405 have established a wireless connection via which data payload (e.g., control plane data and/or user plane data) is being delivered between the UE 402 and the RAT1 base station 405 (reference 412). Keys, configurations, and data governing the established connection 412 between the UE 402 and RAT1 base station 405 are stored locally at the RAT1 base station 405 in a context of the UE 402, which may be implemented in an Access Stratum (AS) corresponding to the UE and RAT1 base station 405, or in some other suitable storage mechanism that is accessible to the RAT1 base station 405. The context of the UE 402 may include, for example, a current key K_{BS1} corresponding to the RAT1 base station 405, a current integrity protection key Kᵢₙₜ (e.g., K_{RRCint}), a current control-plane encryption/decryption key K_{CPenc} (e.g., K_{RRCenc}), a current user-plane encryption/decryption key K_{UPenc}, a Robust Header Compression (ROHC) state, a Cell Radio Network Temporary Identifier (C-RNTI) used in a source personal cell (PCell) of the RAT1 base station 405, a target cell identity of the PCell, a physical cell identity of the PCell, respective configurations of a first Signaling Radio Bearer (SRB1), a second Signaling Radio Bearer (SRB2), and a Digital Radio Bearer (DRB), and/or other parameters associated with the configuration of the connection 412 between the UE 402 and the RAT1 base station 405. The RAT1 base station 405 may have received the current base station key K_{BS1} from the AMF/MME 410 or from another RAT1 or RAT2 base station, for example. The key K_{BS1} may be a K_{gNB} key when RAT1 is NR, and the key K_{BS1} may be a K_{eNB} key when RAT1 is EUTRA, for example. The context of the UE 402 may also include, for example, one or more other parameters associated with the UE 402.

In FIG. 4, the RAT1 base station 405 has configured the UE 402 that is in the CONNECTED-RAT1 state, e.g., by the RAT1 base station 405 providing the UE 402 with at least some of the information stored in the UE's context at the RAT1 base station 405 and/or indications of the stored UE context information. For example, the RAT1 base station 405 may have provided the UE 402 with the corresponding integrity protection algorithm and/or ciphering algorithm that were configured by the RAT1 base station, and the RAT1 base station 405 may have commanded or instructed the UE 402 to activate integrity protection and/or ciphering. In response to the received activation command, the UE 402 may have derived the current base station key K_{BS1} corresponding to the RAT1 base station 405, e.g., from a Next Hop (NH). The UE 402 may have utilized the base station key K_{BS1} and the integrity protection algorithm to locally derive the current integrity protection key Kᵢₙₜ, and may have utilized the base station key K_{BS1} and the ciphering algorithm to locally derive the current control-plane encryption/decryption key K_{CPenc}, and/or the current user-plane encryption/decryption key K_{UPenc}, in some embodiments. In some embodiments, the RAT1 base station 405 may have provided at least one of the current integrity protection key Kᵢₙₜ, the current control-plane encryption/decryption key K_{CPenc}, and/or the current user-plane encryption/decryption key K_{UPenc} to the UE 402.

With respect to data being transferred via the established connection 412 between the UE 402 and the RAT1 base station 405, the UE 402 may utilize the integrity protection key Kᵢₙₜ to perform integrity protection on control-plane data that the UE 402 intends to transmit (e.g., for transmission) to the RAT1 base station 405 (e.g., that the data activity 412 includes), the UE 402 may utilize the control-plane encryption/decryption key K_{CPenc} to encrypt the integrity-protected control-plane data that is to be transmitted to the RAT1 base station 405, and the UE 402 may utilize the user-plane encryption/decryption key K_{UPenc} to encrypt user-plane data (e.g., that the data activity 412 includes) that is to be transmitted to the RAT1 base station 405. Similarly, the UE 402 may utilize the user-plane encryption/decryption key K_{UPenc} to decrypt user-plane data received from the RAT1 base station 405 (e.g., that the data activity 412 includes), the UE 402 may utilize the control-plane encryption/decryption key K_{CPenc} to decrypt integrity-protected control-plane data received from the RAT1 base station 405 (e.g., that the data activity 412 includes), and the UE 402 may utilize the integrity protection key Kᵢₙₜ to integrity check the decrypted, received control-plane data.

In some scenarios, the RAT1 base station 405 provides, to the UE 402, at least some of the key, configuration, and/or data governing the connection between the UE 402 and the RAT1 base station 405 prior to or in conjunction with the initial stages of the message flow 400 shown in FIG. 4. For example, the RAT1 base station 405 may indicate, to the UE 402, the first Signaling Radio Bearer (SRB1), the second Signaling Radio Bearer (SRB2), the Digital Radio Bearer (DRB), and/or other context information of the UE 402 at some time prior to establishing the connection between the UE 402 and the RAT1 base station 405, at some time prior to delivering data 412, or at some other time prior to the RAT1 base station 405 sending an inactivate command 418 to the UE 402. The RAT1 base station 405 may send one or more of the SRB1, SRB2, or DRB configuration information and/or other key, configuration, and/or governing data information to the UE 402 in a set up message and/or in a reconfiguration message, for example.

In an example embodiment in which RAT1 is NR, the NR RAT1 base station 405 may generate or determine at least some of the key, configuration, and/or governing data information, store the generated/determined information in the context of the UE, and transmit, to the UE 402, at least some of the key, configuration, and/or governing data information stored in the context of the UE, e.g. in an *RRCSetup* message. The *RRCSetup* message may include a first NR SRB configuration to configure the SRB 1, for instance. Subsequently, the NR RAT1 base station 405 may transmit, via the configured SRB1, an *RRCReconfiguration* message to the UE 402, where the *RRCReconfiguration* message includes a second NR SRB configuration to configure the SRB2. Additionally or alternatively, the NR RAT1 base station 405 may transmit, via the configured SRB1, an *RRCReconfiguration* message to the UE 402, where the *RRCReconfiguration* message includes an NR DRB configuration to configure the DRB. In some embodiments, a single *RRCReconfiguration* message transmitted by the NR RAT1 base station 405 to the UE 402 includes both the second NR SRB configuration and the NR DRB configuration.

In another example embodiment in which RAT 1 is EUTRA, the EUTRA RAT 1 base station 405 may generate or determine at least some of the key, configuration, and/or governing data information, store the generated/determined information in the context of the UE, and transmit, to the UE 402, at least some of the key, configuration, and/or governing data information stored in the context of the UE, e.g., in an *RRCConnectionSetup* message. The *RRCConnectionSetup* message may include a first EUTRA SRB configuration (e.g., the SRB-ToAddMod IE corresponding to EUTRA) to configure the SRB 1, for instance. Subsequently, the EUTRA RAT1 base station 405 may transmit an *RRCConnectionReconfiguration* message via the configured SRB 1 to the UE 402, where the *RRCConnectionReconfiguration* message includes a first NR SRB configuration (e.g., SRB-ToAdd Mod IE corresponding to NR) to reconfigure SRB1, and includes a second EUTRA SRB configuration (e.g., SRB-ToAddMod IE corresponding to EUTRA) and a second NR SRB configuration (e.g., SRB-ToAddMod IE corresponding to NR) to configure the SRB2. Further, the RAT1 base station 405 may transmit an *RRCConnectionReconfiguration* message via the configured SRB 1 to the UE 402, where the *RRCConnectionReconfiguration* message include a EUTRA DRB configuration (e.g., DRB-ToAddMod IE corresponding to EUTRA) and an NR DRB configuration (e.g., DRB-ToAddMod IE corresponding to NR) to configure the DRB. In some embodiments, a single *RRCConnectionReconfiguration* message transmitted by the EUTRA RAT1 base station 405 to the UE 402 includes the first NR SRB configuration, the second EUTRA SRB configuration, the second NR SRB configuration, the NR DRB configuration, and the EUTRA DRB configuration.

In some handover scenarios corresponding to the connection 412 between the UE 402 and the RAT1 base station 405 in which RAT1 is NR (not shown in FIG. 4), the NR RAT1 base station 405 receives, from another base station, at least one of the SRB 1, SRB2, or DRB configuration information and/or other key, configuration, and/or governing data information corresponding to the connection 412, e.g., in a handover request message. In these handover scenarios, the handover requesting base station (and not the NR RAT1 base station 405) may provide at least one of the configuration and/or other governing data information to the UE 402, e.g., prior to the NR RAT1 base station 405 transmitting the inactivate command 418 to the UE 402 and indeed, in some scenarios, prior to the establishment of the connection 412 between the UE 402 and the NR RAT1 base station 405. The NR RAT1 base station 405 may provide, to the handover requesting base station, handover-related configuration and (optionally) additional configuration corresponding to the connection 412, thereby instructing the handover requesting base station to forward or relay the handover-related configuration and the additional configuration (if any) to the UE 402. For example, the NR RAT1 base station 405 may provide, to the handover requesting base station, handover-related configuration and optional additional configuration corresponding to the connection 412 within an *ReconfigurationWithSync* information element (IE) and/or other fields of an *RRCReconfiguration* message, where the *RRCReconfiguration* message is included in a handover request acknowledgement transmitted by the NR RAT1 base station 405 the handover requesting base station. Subsequently, the UE 402 may perform a handover to the NR RAT1 base station 405 according to the handover-related configuration and additional configuration information (if any) obtained from the handover requesting base station, and consequently, the NR RAT1 base station 405 may receive a corresponding *RRCConfigurationComplete* message from the UE 402 indicating that the UE 402 has reconfigured itself according to the configuration(s) that the handover requesting base station forwarded or relayed to the UE 402.

In some handover scenarios corresponding to the connection 412 between the UE 402 and the RAT1 base station 405 in which RAT1 is NR (not shown in FIG. 4), the NR RAT1 base station 405 receives, prior to transmitting the inactivate command 418 to the UE 402, a handover request message from another base station. In these handover scenarios, the NR RAT1 base station 405 has stored and/or has access to at least one of the SRB 1, SRB2, or DRB configuration and/or other key, configuration, and/or governing data information corresponding to the connection 412 (e.g., in a local context of the UE). The NR RAT1 base station 405 provides at least some of the key, configuration, and/or governing data information corresponding to the connection 412 to the handover requesting base station, thereby instructing the handover requesting base station to forward or relay at least one of the provided key, configuration, and/or governing data information to the UE 402. For example, the NR RAT1 base station 405 may provide, to the handover requesting base station, at least some of the key, configuration, and/or governing data information corresponding to the connection 412 within an *RRCReconfiguration* message, where the *RRCReconfiguration* message is included in a handover request acknowledgement transmitted by the NR RAT1 base station 405 to the handover requesting base station. The NR RAT1 base station 405 may also provide handover-related configuration to the handover requesting base station, e.g., within a *ReconfigurationWithSync* IE of the *RRCReconfiguration* message. Subsequently, the UE 402 may perform handover to the NR RAT1 base station 405 according to the handover-related configuration. As such, the NR RAT1 base station 405 may receive a corresponding *RRCConfigurationComplete* message from the UE 402 indicating that the UE 402 has reconfigured itself according to the key, configuration, and/or governing data information that the handover requesting base station forwarded or relayed to the UE 402.

In some handover scenarios corresponding to the connection 412 between the UE 402 and the RAT1 base station 405 in which RAT1 is EUTRA (not shown in FIG. 4), the EUTRA RAT1 base station 405 receives, in a handover request message from another base station, and prior to the EUTRA RAT1 base station 405 transmitting the inactivate command 418 to the UE 402, a first EUTRA SRB configuration and a first NR SRB configuration for the SRB1, a second EUTRA SRB configuration and a second NR configuration for the SRB2, a EUTRA DRB configuration and an NR DRB configuration for the DRB, and/or other key, configuration, and/or governing data information corresponding to the connection 412. In these handover scenarios, the handover requesting base station (and not the EUTRA RAT1 base station 405) may provide at least one of the configuration and/or other governing data information to the UE 402, e.g., prior to the EUTRA RAT1 base station 405 transmitting the inactivate command 418 to the UE 402 and indeed, in some scenarios, prior to the establishment of the connection 412 between the UE 402 and the EUTRA RAT1 base station 405. The EUTRA RAT1 base station 405 may provide, to the handover requesting base station, handover-related configuration and (optionally) additional configuration information corresponding to the connection 412, thereby instructing the handover requesting base station to forward or relay the handover-related configuration and the additional configuration (if any) to the UE 402. For example, the EUTRA RAT1 base station 405 may provide, to the handover requesting base station, handover related configuration and optional additional configuration information corresponding to the connection 412 in a *MobilityControlInfo* IE and/or other fields of an *RRCConnectionReconfiguration* message, where the *RRCConnectionReconfiguration* message is included in a handover request acknowledgement message transmitted by the EUTRA RAT1 base station 405 to the handover requesting base station. Subsequently, the UE 402 may perform a handover to the EUTRA RAT1 base station 405 according to the handover-related configuration and additional configuration information (if any). As such, the EUTRA RAT1 base station 405 may receive a corresponding *RRCConnectionConfigurationComplete* message from the UE 402 indicating that the UE 402 has reconfigured itself according to the configuration(s) that the handover requesting base station forwarded or relayed to the UE 402.

In some handover scenarios corresponding to the connection 412 between the UE 402 and the EUTRA RAT1 base station 405 in which RAT1 is EUTRA (not shown in FIG. 4), the EURTRA RAT1 base station 405 receives, prior to transmitting the inactivate command 418 to the UE 402, a handover request message from another base station. In these handover scenarios, the EUTRA RAT1 base station 405 has stored and/or has access to at least one of a first EUTRA SRB configuration and a first NR SRB configuration for the SRB1, a second EUTRA SRB configuration and a second NR configuration for the SRB2, a EUTRA DRB configuration and an NR DRB configuration for the DRB, and/or other key, configuration, and/or governing data information corresponding to the connection 412 (e.g., in a local context of the UE). The EUTRA RAT1 base station 405 provides at least some of the key, configuration, and/or governing data information corresponding to the connection 412 to the handover requesting base station, e.g., in an *RRCConnectionReconfiguration* message (which may be included in a handover request acknowledgement message), thereby instructing the handover requesting base station to forward or relay at least one of the provided key, configuration, and/or governing data information to the UE 402. Subsequently, the EUTRA RAT1 base station 405 may receive a corresponding *RRCConnectionConfigurationComplete* message from the UE 402 indicating that the UE 402 has reconfigured itself according to the provided key, configuration, and/or governing data information that the handover requesting base station forwarded or relayed to the UE 402.

At any rate, at some point in time after data has been delivered 412 between the UE 402 and the RAT1 base station 405, the RAT1 base station 405 detects that no data activity or insufficient data activity (e.g., data activity below a threshold) has been transmitted via the established wireless connection 412 over some interval of time (reference 415), where the interval of time may be of a pre-determined duration. Based on the detection 415, the RAT1 base station 405 transmits a command 418 to the UE 402 to inactivate or otherwise enter into the INACTIVE-RAT1 state. In some embodiments, the inactivate command 418 includes key-related information, configuration information, and/or information indicative of data governing the previously established connection 412 between the UE 402 and the RAT1 base station 405.

For example, when RAT1 is NR, the NR RAT1 base station 405 transmits an NR *RRCRelease* message with a *Suspend* indication (or similar inactivating command) 418 to the UE 402. The *Suspend* indication may be, for instance, a suspend configuration IE such as the *SuspendConfig* IE corresponding to NR. In the inactivate command 418, the NR RAT1 base station 405 in some implementations may include key information, configuration information, and/or information indicative of other types of data that governed the previously-established connection 412. For instance, the NR RAT1 base station 405 may include, in the inactivate command 418, at least some of the information stored in the context of the UE 402, such as the current key K_{BS1} corresponding to the NR RAT1 base station 405, the current integrity protection key Kᵢₙₜ, the ROHC state, the C-RNTI used in the PCell of the NR RAT1 base station 405, the cell identity of the PCell, the physical cell identity of the PCell, and/or other parameters associated with the configuration of the previously-established connection 412 between the UE 402 and the NR RAT1 base station 405. Indeed, in some scenarios, the NR RAT1 base station 405 may include, in the inactivate command 418, indications of all parameters stored within the context of the UE 402 with the exception of parameters corresponding to synchronized reconfiguration (e.g., the *ReconfigurationWithSync* parameter).

In another example in which RAT1 is EUTRA, the EUTRA RAT1 base station 405 transmits an *RRCConnectionRelease* message including an *Inactivate* indication (or similar inactivating command) 418 to the UE 402. The *Inactivate* indication may be, for instance, an inactive configuration information element (IE) such as the *RRC-InactiveConfig-r15* IE corresponding to EUTRA. The EUTRA RAT1 base station 405 in some implementations may include, in the inactivate command 418, key information, configuration information, and/or information indicative of other types of data that governed the previously-established connection 412. For instance, the EUTRA RAT1 base station 405 may include, in the inactivate command 418, at least some of the information stored in the context of the UE 402, such as the *Inactivate* indication, a current key K_{BS1} corresponding to the EUTRA RAT1 base station 405, the current integrity protection key Kᵢₙₜ, the ROHC state, the C-RNTI used in the PCell of the EUTRA RAT1 base station 405, the cell identity of the PCell, the physical cell identity of the PCell, and/or other parameters associated with the configuration of the previously-established connection 412 between the UE 402 and the EUTRA RAT1 base station 405. Indeed, in some scenarios, the EUTRA RAT1 base station 405 may include, in the inactivate command 418, indications of all parameters stored within the context of the UE 402, with the exception of parameters corresponding to reconfiguration due to mobility reasons (e.g., the *MobilityControlInfo* parameter).

Moreover, in some implementations, the RAT1 base station 405 includes a Next Hop Chaining Count value (e.g., *NextHopChainingCount* IE) in the inactivate command 418. In some implementations, the RAT1 base station 405 includes, in the inactivate command 418, an Inactive Radio Network Temporary Identifier (I-RNTI) that is indicative of the RAT1 base station 405. The RAT1 base station 405 may have self-assigned the I-RNTI based on the detection of insufficient data activity 415, for example.

In addition to transmitting the inactivate command 418 in response to the detection of no or insufficient data activity 415, the RAT1 base station 405 maintains the instance of the UE's context corresponding to the previously-established connection 412 (reference 420). For example, the RAT1 base station 405 may maintain the instance of the context 420 of the UE in the Access Stratum of the UE 402, and/or in some other suitable storage mechanism that is accessible to the RAT1 base station 405.

At the UE 402, upon reception of the inactivating command 418 (or, in some embodiments, due to some other trigger such as the UE 402 autonomously detecting that no or insufficient data activity has occurred over some pre-determined interval or time, or some other inactivating condition), the UE 402 transitions from the CONNECTED-RAT1 state into the INACTIVE-RAT1 state. At some point in time thereafter, the UE 402 selects or reselects the inter-RAT, RAT2 base station 408, and at another point in time after the selection or reselection, the UE 402 has user-plane data (e.g., an Internet Protocol (IP) packet) or control-plane data (e.g., a Non-Access Stratum (NAS) message) to transmit to the system and consequently resumes its connection with the RAT2 base station 408 (reference 422). Generally speaking, the UE 402 selects the RAT2 base station 408 when the UE 402 is not camped on to any other base station, and the UE 402 reselects the RAT2 base station 408 when the UE 402 is camped onto the RAT1 base station 405 or another base station and the RAT2 base station 408 provides better measurements or is otherwise more favorable for servicing the UE 402 than is the camped-onto base station. The UE 402 may select/reselect the RAT2 base station 408 based on measurements of signals generated by the RAT2 base station 408 and/or other base stations, cell selection criteria, cell reselection criteria, carrier frequency, base station identity, and/or other criteria. In an example, the UE 402 selects or reselects the rat to base station 408 based solely on signal measurements of various base stations. In an additional or alternate example, the RAT1 base station 405 includes an indication of the RAT2 base station 408 and/or of a RAT2 carrier frequency within the inactivate command 418, and the UE 402 selects or reselects the RAT2 base station 408 based on the indications included in the inactivate command 418.

At any rate, upon (re)selecting the inter-RAT, RAT2 base station 408, the UE 402 transitions from the INACTIVE-RAT1 state into the INACTIVE-RAT2 state. While the UE 402 in the INACTIVE-RAT2 state, the UE 402 transmits, to the RAT2 base station 408, a request for the UE 402 to resume its connection with the system (reference 425). For example, when RAT2 is NR, the UE 402 transmits an *RRCResumeRequest* message or similar to the RAT2 base station 408, and when RAT2 is EUTRA, the UE 402 transmits an *RRCConnectionResumeRequest* message or similar to the RAT2 base station 408. In some implementations, the UE 402 includes, in the request 425, an indication of the RAT1 base station 405 and/or at least some of the context of the UE 402. For example, the UE 402 may include, in the request 425, an Inactive Radio Network Temporary Identifier (I-RNTI) that is indicative of the RAT1 base station 405, and/or the UE 402 may include, in the request 425, an entirety or a portion of the context of the UE 402. The RAT1 base station 405 may have self-assigned the I-RNTI based on the detection of insufficient data activity 415, for example, and delivered the I-RNTI to the UE 402 via the inactivate command 418.

The UE 402 includes, in the request 425 to resume its connection with the system, a message authentication code for integrity protection that corresponds to the RAT2 base station 408. For example, the UE 402 may generate a value of a resume message authentication code for integrity protection field (*resumeMAC-I*), and include the generated value in the request 425. The UE 402 may generate the resume message authentication code value based on the identity of the RAT2 base station 408 (e.g., a cell identity of the RAT2 base station 408), the identity of the RAT1 base station 405 (e.g., a physical cell identity of the RAT1 base station 405), a Cell Radio Network Temporary Identifier (C-RNTI) that the UE 402 received from the RAT1 base station 405, a base station key K_{BS1} associated with the RAT1 base station 405 and/or an integrity key Kᵢₙₜ, and corresponding integrity protection algorithm that were previously configured by the RAT1 base station 405 in association with the established connection 412 between the UE 402 and the RAT1 base station 405. For instance, the UE 402 may derive an integrity key Kᵢₙₜ from the key K_{BS1} associated with the RAT1 base station 405, and the UE 402 may utilize the derived integrity key Kᵢₙₜ to generate the value of the resume message authentication code for integrity protection. The key K_{BS1} may be a K_{gNB} key when RAT1 is NR, and the key K_{BS1} may be a K_{eNB} key when RAT2 is EUTRA, for example.

At the RAT2 base station 408, upon receiving the request 425 from the UE 402 to resume the connection of the UE 402 with the system, the RAT2 base station 408 determines, from the received request 425, the identity of the base station that last or most recently serviced the UE 402, in this scenario, the RAT1 base station 405. The RAT2 base station 408 transmits, to the RAT1 base station 405 (e.g., via the inter-RAT base station interface 220 of the RAT2 base station 408), a request 428 (e.g., a *RETRIEVE UE CONTEXT REQUEST* message) for information corresponding to a context of a connection of the UE with the system via the RAT1 base station 405. The RAT2 base station 408 may include the resume message authentication code value, the I-RNTI, a C-RNTI allocated by the RAT2 base station 408, and/or an indication of the identification of the RAT2 base station 408 in the request 428 transmitted to the RAT1 base station 405, for example.

At the RAT1 base station 405, upon receiving the request 428 of the RAT2 base station 408, the RAT1 base station 405 authenticates or verifies the request 428 (reference 430), e.g., by verifying the correctness of the resume message authentication code value included in the request 428. To verify the correctness of the resume message authentication code value, in an embodiment, the RAT1 base station 405 may generate a resume message authentication code value based on the UE context maintained at the RAT1 base station 405 (reference 420), and the RAT1 base station 405 may compare the generated resume message authentication code value with the resume message authentication code value that the RAT1 base station 405 received in the UE context request 428 from the RAT2 base station 408. For example, the RAT1 base station 405 may generate a resume message authentication code value based on the identification of the RAT2 base station 408 (e.g., a cell identity of the RAT2 base station 408 received via the request 428), the identification of the RAT1 base station 405 (e.g., a physical cell identity of the RAT1 base station 405), and/or information stored in the maintained UE context 420, such as a Cell Radio Network Temporary Identifier (C-RNTI), a base station key K_{BS1} associated with the RAT1 base station 405 and/or an integrity key Kᵢₙₜ, and/or corresponding integrity protection algorithm. If the generated resume message authentication code value and the resume message authentication code value received in the UE context request 428 match or are otherwise consistent, the RAT1 base station 405 may proceed with obtaining the UE's context information and providing indications of at least some of the UE's context information to the RAT2 base station 408 in a response (e.g., a *RETRIEVE UE CONTEXT RESPONSE* message) to the request for UE context (reference 432).

Generally speaking, the context of the UE 402 maintained by the RAT1 base station 405 (reference 420) may include key information corresponding to the previously established connection 412 between the UE 402 and the RAT1 base station 405. For example, key information may include a base station key K_{BS1} that the RAT1 base station 405 has received from the AMF/MME 410 or from another base station and/or a current Next Hop Chaining Count value (e.g., *NextHopChainingCount* IE) associated with the base station key K_{BS1}. The key information may include one or more other keys (e.g., an integrity key K_{int,} a control-plane data encryption key K_{CPenc}, and/or a user-plane data encryption key K_{UPenc}) that the RAT1 base station 405 has derived from its base station key K_{BS1}. The RAT1 base station 405 may utilize the integrity key Kᵢₙₜ to integrity protect control-plane data that is to be transmitted by the RAT1 base station 405 to the UE 402, and may utilize the control-plane data encryption key K_{CPenc} to encrypt the integrity-protected control-plane data that is to be transmitted by the RAT1 base station 405 to the UE 402 and decrypt control-plane data that the RAT1 base station 405 receives from the UE 402. The RAT1 base station 405 may utilize the integrity key Kᵢₙₜ to check the integrity of the decrypted control-plane data received from the UE 402, and may utilize the user-plane data encryption key K_{UPenc} to encrypt user-plane data that is to be transmitted by the RAT1 base station 405 to the UE, and decrypt user-plane data received from the UE 402.

Additionally or alternatively, the context of the UE 402 maintained by the RAT1 base station 405, e.g., within an instance of the UE's AS (reference 420), may include configuration information corresponding to the previously established connection 412 between the UE 402 and the RAT1 base station 405. For example, when RAT1 is EUTRA, the EUTRA configuration information included in the UE's context may include a EUTRA radio resource configuration, a EUTRA data radio bearer (DRB) robust header compression (ROHC) continue configuration, and/or a EUTRA measurement configuration. The EUTRA radio resource configuration may include a physical layer configuration, a medium access control configuration, a first EUTRA signaling radio bearer (SRB) configuration corresponding to a EUTRA SRB1, a second EUTRA SRB configuration corresponding to a EUTRA SRB2, and/or a EUTRA data radio bearer (DRB) configuration corresponding to a EUTRA DRB. The first EUTRA SRB configuration may include a first radio link control (RLC) configuration corresponding to the EUTRA SRB1, the second EUTRA SRB configuration may include a second radio link control (RLC) configuration corresponding to the EUTRA SRB2, and/or the EUTRA DRB configuration may include an RLC configuration corresponding to the EUTRA DRB, for example.

In another example in which RAT1 is NR, the NR configuration included in the UE's context may include a NR cell group configuration, a NR measurement configuration, and/or a NR radio bearer configuration. The NR radio bearer configuration may include a first NR signaling radio bearer (SRB) configuration corresponding to a NR SRB1, a second NR SRB configuration corresponding to a NR SRB2, and/or an NR data radio bearer (DRB) configuration corresponding to a NR data radio bearer. The NR cell group configuration may include, for example, at least one of: a cell group identity, a physical layer configuration, a medium access control configuration, a special cell configuration, a first RLC bearer configuration corresponding to the NR SRB1, a second RLC configuration corresponding to the NR SRB2, or third RLC configuration corresponding to the NR DRB. In some implementations, the first RLC bearer configuration and the first NR SRB configuration may each include an identification of the NR SRB1, the second RLC bearer configuration and the second NR SRB configuration may each include an identification of the NR SRB2, and the third RLC bearer configuration and/or the NR DRB configuration may each include an identification of the NR DRB.

At any rate, in response to a verified request 428 for UE context received from the RAT2 base station 408, the RAT1 base station 405 may access the locally stored context of the UE 402 (e.g., reference 420), and generate a response 432 that includes indications of any one or more keys, configurations, and/or data that governed the previously established connection 412 between the UE 402 and the RAT1 base station 405. For example, the RAT1 base station 405 may include an entirety of the stored UE context in the response 432, or the RAT1 base station 405 may include only a subset of the configurations and/or data stored in the UE context in the response 432, or indications thereof. In an embodiment, the RAT1 base station 405 includes, in the response 432 to the request for UE context, a UE Security Capabilities IE, a UE Security Information IE, a UE Aggregate Maximum Bit Rate IE, a protocol data unit (PDU) Session Resources To Be Setup List IE, and/or a *HandoverPreparationInformation* IE that are retrieved from the locally stored UE context of the UE 402. The UE Security Information IE may include a Next Hop Chaining Count value and a new base station key K_{BS2} (e.g., a Key NG-RAN Star (K_{NG-RAN}*)) corresponding to the RAT2 base station 408, for example. The key K_{BS2} may be a K_{gNB} key when RAT1 is NR, and the key K_{BS2} may be a K_{eNB} key when RAT2 is EUTRA, for instance.

In some implementations, the RAT1 base station 405 includes, e.g., in the UE Security Information IE, a Next Hope Chaining Count value that is the same as the Next Hop Chaining Count value (e.g., *NextHopChainingCount IE*) that the RAT1 base station 405 included in the inactivate command 418. In some scenarios, when the Next Hop Chaining Count value is associated to a Next Hop (NH) that has never been used to derive a base station key, the RAT1 base station 405 derives the new base station key K_{BS2} from the NH and a physical cell identity of the RAT2 base station 408. In some scenarios, when the Next Hop Chaining Count value is associated to a NH which has been used to derive a base station key (e.g., the base station key K_{BS1}), the RAT1 base station 405 derives the new base station key K_{BS2} from the base station key K_{BS1}. In one implementation, the RAT2 base station 408 includes the physical cell identity of the RAT2 base station 408 in the UE context request 428. For example, the physical cell identity of the RAT2 base station 408 may be a physical cell identity of a cell at which the RAT2 base station receives the request 425.

At the RAT2 base station 408, upon reception of the response 432 to the request for UE context, the RAT2 base station 408 may generate and locally store a context of the UE 435, where the locally stored UE context 435 is based on the new base station key K_{BS2}, configurations, and/or other UE context data indicated in the received response 432.

The RAT2 base station 408 may derive one or more other keys (e.g., an integrity key K_{int2,} a control-plane data encryption key K_{CPenc2}, and/or a user-plane data encryption key K_{UPenc2}) based on its key K_{BS2}. The RAT2 base station 408 may utilize the derived integrity key Kᵢₙₜ₂ to integrity protect control-plane data that is to be transmitted by the RAT2 base station 408 to the UE 402 and to check the integrity of the decrypted control-plane data received from the UE 402. The RAT2 base station 408 may utilize the derived control-plane data encryption key K_{CPenc2} to encrypt the integrity-protected control-plane data that is to be transmitted by the RAT2 base station 408 to the UE 402, and to decrypt encrypted control-plane data that the RAT2 base station 408 receives from the UE 402; and the RAT2 base station 408 may utilize the user-plane data encryption key K_{UPenc2} to encrypt user-plane data that is to be transmitted by the RAT2 base station 408 to the UE 402, and/or to decrypt encrypted user-plane data that the RAT2 base station 408 receives from the UE 402. The RAT2 base station 408 may store the context of the UE (whether received or derived) in a local instance of an AS of the UE generated by the RAT2 base station 408 (as depicted by reference 435), or in some other suitable storage mechanism at or accessible to the RAT2 base station 408.

As further depicted in FIG. 4, the RAT2 base station 408 transmits, to the UE 402, a resume connection response message (reference 438). For example, when RAT2 is NR, the RAT2 base station 408 transmits an *RRCResume* message or similar resume connection response message 438 to the UE 402, and when RAT2 is EUTRA, the RAT2 base station 408 transmits an *RRCConnectionResume* message or similar resume connection response message 438 to the UE 402. In some implementations, the resume connection response message 438 may include at least some of the configuration and/or data of the locally stored or locally accessible UE context 435. In other implementations, the resume connection response message 438 may include a new configuration which is a replacement for the configuration of the locally stored or locally accessible UE context 435. In further implementations, the resume connection response message 438 may include a new configuration which is not included in or related to the locally stored or locally accessible UE context 435.

In some scenarios, the resume connection response message 438 may include an entirety of a RAT1 configuration associated with the previous, most recent connection between the UE 402 and the RAT1 base station 405 (e.g., a full RAT1 configuration), or the resume connection response message 438 may include only a portion of the full RAT1 configuration. In these scenarios, the UE 402 may derive, from the full or partial RAT1 configuration, at least some of the RAT2 configuration corresponding to the resuming connection with the RAT2 base station 408.

In some scenarios, the resume connection response message 438 includes an entirety of a RAT2 configuration (e.g., a full RAT2 configuration), or only a portion of the full RAT2 configuration. When the resume connection response message 438 includes only a portion of the full RAT2 configuration, the UE 402 may derive an additional portion or a remainder of the RAT2 configuration from the portion of the full RAT2 configuration.

Upon reception of the resume connection response message 438, the UE 402 transitions from the INACTIVE-RAT2 state into the CONNECTED-RAT2 state, and configures itself based on the received configuration and/or other context data. For example, the UE 402 may derive a second base station key K_{BS2} corresponding to the RAT2 base station 408 from the first base station key K_{BS1} or from a NH (Next Hop) in accordance with the Next Hop Chaining Count value included in the inactivate command 418. In some implementations, when the Next Hop Chaining Count value included in the inactivate command 418 is the same as the Next Hop Chaining Count value associated with the base station key K_{BS1}, the base station 405 may derive the new base station key K_{BS2} from the base station key K_{BS1}. Otherwise, when the Next Hop Chaining Count value in the inactivate command 418 is different from the Next Hop Chaining Count value associated with the base station key K_{BS1}, the UE 402 may derive the new base station key K_{BS2} from the NH and a physical cell identity of the RAT2 base station 408. The physical cell identity of the RAT2 base station may be a physical cell identity of a cell to which the UE 402 transmitted the request 425, for example. The key K_{BS2} may be a K_{gNB} key when RAT2 is NR, and the key K_{BS2} may be a K_{eNB} key when RAT2 is EUTRA, for example.

Based on the derived, second base station key K_{BS2}, the UE 402 may derive a second integrity protection key Kᵢₙₜ, a second user-plane data encryption/decryption key K_{CPenc}, and/or a second control-plane data encryption/decryption key K_{UPenc}. At any rate, upon completing its configuration with respect to the RAT2 base station 408, the UE 402 may transmit a resume connection complete message 440 to the RAT2 base station 408 (reference 440), which may be transmitted as control-plane data. More specifically, the UE 402 may utilize the second integrity protection key Kᵢₙₜ to perform integrity protection on the resume connection complete message 440, and the UE 402 may utilize the second control-plane encryption/decryption key K_{CPenc} to encrypt the integrity-protected resume connection complete message 440 that is to be transmitted to the RAT2 base station 408. For example, when RAT2 is NR, the UE 402 transmits an *RRCResumeComplete* or similar resume connection complete message 440 to the RAT2 base station 408, and when RAT2 is EUTRA, the UE 402 transmits an *RRCConnectionResumeComplete* or similar resume connection complete message 440 to the RAT2 base station 408.

Subsequent to transmitting the resume connection complete message 440, the configured UE 402 may begin transmitting additional control-plane data and/or user-plane data to the system via the resumed connection 442 with the RAT2 base station 408, and begin receiving control-plane and/or user-plane data from the system via the resumed connection 442 with the RAT2 base station 408. The UE 402 may utilize the second integrity protection key Kᵢₙₜ to perform integrity protection on control-plane data that the UE 402 intends to transmit (e.g., for transmission) to the RAT2 base station 408 (e.g., that the data activity 442 includes), the UE 402 may utilize the second control-plane encryption/decryption key K_{CPenc} to encrypt the integrity-protected control-plane data that is to be transmitted to the RAT2 base station 408, and the UE 402 may utilize the second user-plane encryption/decryption key K_{UPenc} to encrypt user-plane data (e.g., that the data activity 442 includes and that is to be transmitted to the RAT2 base station 408. Similarly, the UE 402 may utilize the second user-plane encryption/decryption key K_{UPenc} to decrypt user-plane data received from the RAT2 base station 408 (e.g., received user-plane data that the data activity 442 includes), the UE 402 may utilize the second control-plane encryption/decryption key K_{CPenc} to decrypt integrity-protected control-plane data received from the RAT2 base station 408 (e.g., received, encrypted, integrity-protected control-plane data that the data activity 442 includes), and the UE 402 may utilize the second integrity protection key Kᵢₙₜ to integrity check the decrypted, received control-plane data.

At the RAT2 base station 408, upon receiving the response 432 from the RAT1 base station 405, upon transmitting the resume connection message 438 to the UE 402, or upon receiving the resume connection complete 440 message from the UE 402, the RAT2 base station 408 sends a request for a path switch 445 to the AMF/MME 410 of the wireless communication system and receives, from the AMF/MME 410, a path switch response 448 to the request 445. After receiving the response 432, or based on the reception of the path switch response 448, the RAT2 base station 408 instructs the RAT1 base station 405 to release the UE context stored locally at the RAT1 base station 405 (reference 450), and the RAT1 base station 405 does so (reference 452), thereby freeing up resources at the RAT1 base station 405 for other uses.

Generally speaking, the example message flow 400 illustrated in FIG. 4 may occur when both the RAT1 base station 405 and the RAT2 base station 408 are connected to a same type of Core Network, for example, and with simultaneous reference to FIG. 1, when both the RAT1 base station 102 and the RAT2 base station 105 are both connected to a same type of CN1 108, which may be a 5GC core network or an EPC core network, in embodiments.

On the other hand, in embodiments in which the RAT1 base station 405 and the RAT2 base station 408 are respectively connected to different types of core networks, upon selection or reselection of the RAT2 base station 408 (reference 422), instead of the UE 402 transitioning from the INACTIVE-RAT1 state into the INACTIVE-RAT2 state, the UE 402 transitions from the INACTIVE-RAT1 state into the IDLE-RAT2 state (not shown in FIG. 4). In these embodiments, the UE 402 may follow the prior art state transition diagram with respect to a wireless communication network as defined in 3GPP TS 38.331 v15.5.1, "Figure 4.2.1-2: UE State machine and state transitions between NR/5GC, E-UTRA/EPC and E-UTRA/5GC," a copy of which is reproduced in FIG. 5.

Another instance of message flow 400 may occur when the UE 402 transitions from the CONNECTED-RAT2 state (e.g., the CONNECTED-RAT2 state 315) into the INACTIVE-RAT2 state (e.g., the INACTIVE-RAT2 state 322). For example, the RAT2 base station 408 may detect that insufficient or no data activity has occurred over the wireless connection 442 over some interval of time, and consequently the RAT2 base station 408 may instruct the UE 402 to enter into the INACTIVE-RAT2 state. Based on its transition from the CONNECTED-RAT2 state into the INACTIVE-RAT2 state, the UE 402 may select/reselect a third base station that supports a type of RAT different than RAT2 supported by the RAT2 base station 408. For example, the UE 402 may select/reselect the RAT1 base station 405, another base station that supports RAT1, or another base station that supports a RAT other than RAT1 or RAT2. Upon selection/reselection of the third base station, the UE 402 may enter into an inactive state of a protocol of the RAT supported by the third base station, the UE may send, to the third base station, a request to resume its connection with the system via the third base station. This instance of the message flow 400 may then proceed in a manner similar to that discussed above with respect to FIG. 4.

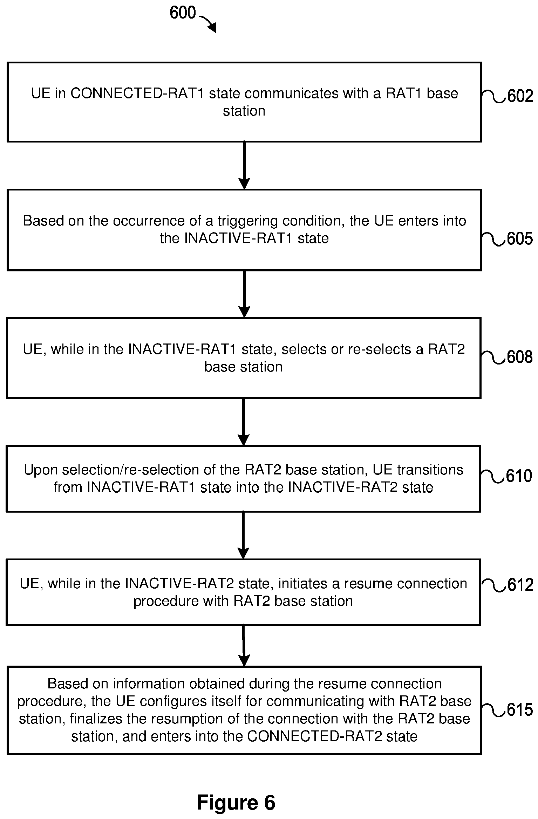

FIG. 6 depicts a flow diagram of an example method 600 in a UE that supports multiple types of RATs, in accordance with one or more of the techniques disclosed within this document. For example, the UE may be the UE 120 of FIG. 1 or the UE 402 of FIG. 4, and the multiple RATs may include NR, EUTRA, and/or other types of RATs. Generally speaking, at least some of the method 600 may be executed in conjunction with the message flow 400 of FIG. 4 and/or in accordance with the state diagram 300 of FIG. 3, and the description of the method 600 below simultaneously references FIGS. 3-4 for clarity of illustration (and not limitation) purposes. Further, in some embodiments, at least portions of the method 600 may execute in conjunction with at least portions of one or more other methods described within this document. Still further, in some embodiments, the method 600 includes one or more alternate and/or additional actions other than those shown in FIG. 6.

At a block 602, a UE that is in a connected state corresponding to a first type of RAT (e.g., a UE that is in the CONNECTED-RAT1 state 312) communicates with a first base station of a wireless communication system, where the first base station supports the first RAT and connects to a Core Network. For example, the first RAT1 base station may be the first RAT1 base station 102 of FIG. 1 or the first RAT1 base station 405 of FIG. 4. The UE may transmit and/or receive control-plane data and/or user-plane data to/from the wireless communication system via the first RAT1 base station via an established wireless connection, (e.g., the connection 412). Further, the UE is configured (e.g., by the RAT1 base station 405 and/or by itself) for transmitting and receiving control-plane and user-plane data via the wireless connection with the RAT1 base station, and the UE may integrity protect, integrity check, encrypt, and decrypt the control-plane and user-plane data using various keys and/or configurations, such as in a manner similar to that described above with respect to FIG. 4.

At a block 605, based on an occurrence of a triggering condition, the UE enters into an inactive state corresponding to RAT1 (e.g., INACTIVE-RAT1 state 325). An example of a triggering condition includes the reception, by the UE, of a message or command generated by the RAT1 base station instructing the UE to enter into the inactive state. Another example of a triggering condition includes the autonomous detection, by the UE, that insufficient or no data activity has occurred over the connection with the RAT1 base station for some pre-determined duration of time. Of course, other triggering conditions may be possible. At any rate, in response to the occurrence of the triggering condition, the UE may transition from the CONNECTED-RAT1 state into the INACTIVE-RAT1 state (block 605).

At a block 608, while the UE is in the inactive state corresponding to RAT1, the UE may select or reselect a second base station for resuming the connection of the UE with the wireless communication system, where the second base station supports a second type of RAT. For example, the second RAT2 base station may be the RAT2 base station 105 of FIG. 1 or the RAT2 base station 408 of FIG. 4. Further, the second RAT2 base station and the first RAT2 base station may be connected to the same (or the same type of) Core Network. With respect to selection and reselection, the UE may select the second RAT2 base station when the UE is not camped onto any base station, and the UE may reselect the second RAT2 base station when the UE is camped onto another base station. Generally speaking, the UE may select/reselect the second RAT2 base station based on measurements, cell identity, and/or other criteria such as previously described. Based on the selection/reselection of the second RAT2 base station, the UE transitions from the inactive state corresponding to RAT1 into an inactive state corresponding to RAT2 (block 610). For example, the UE may transition from INACTIVE-RAT1 state 325 into the INACTIVE-RAT2 state 322.

At a block 612, while the UE is in the inactive state corresponding to RAT2 (e.g., while the UE is in the INACTIVE-RAT2 state 322), the UE may initiate a resume connection procedure with the RAT2 base station. For example, the UE may transmit a request 425 to resume its connection with the wireless communication system via a cell of the RAT2 base station. The request 425 to resume the connection may include, for example, an indication of the RAT1 base station (such as an I-RNTI), and an indication of stored UE context of the UE (such as the I-RNTI), a resume message authentication code for integrity protection, a resume cause, etc., such as previously described.

Subsequently, as a part of the initiated resume connection procedure, the UE may receive, from the RAT2 base station, a response to its request to resume its connection with the wireless communication system via the cell of the RAT2 base station. For example, subsequent to transmitting the resume connection request message 425 to the RAT2 base station 408, the UE 402 may receive, in return from the RAT2 base station 408, a resume connection response message 438. The resume connection response message may include information associated with one or more configurations corresponding to a connection of the UE with the RAT2 base station, and the UE 402 may utilize the received information to configure itself for communicating with the RAT2 base station.

In an example scenario in which RAT1 is NR and RAT2 is E-UTRA, the UE 402, while in the CONNECTED-RAT1 state, has been configured by the RAT1 base station 405 with a NR SRB1, a NR SRB2, and a NR DRB, e.g., prior to the UE transitioning into the INACTIVE-RAT1 state. At some later point time during the message flow 400, in this example scenario, the UE 402 receives the resume connection response message 438 from the RAT2 base station 408, and the received resume connection response message 438 includes an indication of one or more EUTRA configurations. The one or more EUTRA configurations may include, for example, at least one of a EUTRA radio resource configuration or a EUTRA measurement configuration. The UE 402 may use the EUTRA radio resource configuration to communicate control-plane data and user-plane data with the RAT2 base station 408, and the UE 403 may use the EUTRA measurement configuration to perform measurements and measurement reporting. The EUTRA radio resource configuration may include a physical layer configuration, a medium access control configuration, a first EUTRA SRB configuration associated with the NR SRB1, a second EUTRA SRB configuration associated with the NR SRB2, and/or a EUTRA DRB configuration associated with the NR DRB. The first EUTRA SRB configuration may include a first RLC configuration associated with the NR SRB1, the second EUTRA SRB configuration may include a second RLC configuration associated with the NR SRB2, and/or the EUTRA DRB configuration may include a third RLC configuration associated with the NR DRB, for example.

The received resume connection response message 438 may include an indication of one or more NR radio bearer configurations, in some implementations. The one or more NR radio bearer configurations may include, for example, at least one of a first NR SRB configuration corresponding to the NR SRB1, a second NR SRB configuration corresponding to the NR SRB2, or an NR DRB configuration corresponding to the NR DRB. The UE 402 may use the first RLC configuration and/or the first NR SRB 1 configuration to communicate control-plane data over the NR SRB1 with the RAT2 base station 408, and the UE may use the second RLC configuration and/or the first NR SRB 1 configuration to communicate control-plane data over the NR SRB2 with the RAT2 base station 408. The UE may 402 use the third RLC configuration and/or the NR DRB configuration to communicate user-plane data over the NR DRB with the RAT2 base station 408.

In another example scenario, RAT1 is EUTRA and the RAT2 is NR. In this example scenario, the UE 402, while in the CONNECTED-RAT1 state (e.g., prior to the UE transitioning into the INACTIVE-RAT1 state), has been configured by the RAT1 base station 405 with a NR SRB1, a NR SRB2, and a NR DRB and/or, in some situations, with one or more EUTRA SRBs and a EUTRA DRB. At some later point in time during the message flow 400, in this example scenario, the UE 402 receives the resume connection response message 438 from the RAT2 base station 408, and the received resume connection response message 438 may include an indication of one or more NR configurations corresponding to the RAT2 base station 408. The one or more NR configurations corresponding to the RAT2 base station 408 may include, for example, at least one of a NR cell group configuration, a NR measurement configuration, and/or a NR radio bearer configuration. The UE 402 may use the NR cell group configuration and/or the NR radio bearer configuration to communicate control-plane data and user-plane data with the RAT2 base station 408, and the UE 408 may use the NR measurement configuration to perform measurements and measurement reporting. The NR radio bearer configuration may include a first NR signaling radio bearer (SRB) configuration corresponding to the NR SRB 1, a second NR SRB configuration corresponding to the NR SRB2, and/or an NR DRB configuration corresponding to the NR DRB. The NR cell group configuration may include, for example, at least one of: a cell group identity, a physical layer configuration, a medium access control configuration, a special cell configuration, a first RLC bearer configuration corresponding to the NR SRB1, a second RLC configuration corresponding to the NR SRB2, or a third RLC bearer configuration corresponding to the NR DRB. In some implementations, the first RLC bearer configuration and the first NR SRB configuration may each include an identification of the NR SRB1; the second RLC bearer configuration and the second NR SRB configuration may each include an identification of the NR SRB2; and the third RLC bearer configuration and/or the NR DRB configuration may each include an identification of the NR DRB. The UE 402 may use the first RLC bearer configuration and/or the first NR SRB 1 configuration to communicate control-plane data over the NR SRB1 with the RAT2 base station 408, and the UE 402 may use the second RLC bearer configuration and/or the first NR SRB 1 configuration to communicate control-plane data over the NR SRB2 with the RAT2 base station 408. The UE 402 may use the third RLC bearer configuration and/or the NR DRB configuration to communicate user-plane data over the NR DRB with the RAT2 base station 408, for example.

At a block 615, upon the receipt of the resume connection response message, the UE utilizes the information included in the resume connection response to configure itself for communicating with the RAT2 base station. For example, the UE may apply any configurations and/or other data indicated in the resume connection response message, and/or the UE may derive any necessary keys, configurations, and/or other data from the information indicated in the resume connection response message. Accordingly, the UE finalizes the resumption of its connection with the wireless communication system via the RAT2 base station, and transitions from the inactive state corresponding to RAT2 into a connected state corresponding to RAT2. For example, the UE may transition from the INACTIVE-RAT2 state 322 into the CONNECTED-RAT2 state 315. The UE, while in the connected state corresponding to RAT2, may indicate, to the RAT2 base station, a completion of the resumption of its connection with the system (e.g., by transmitting a resume connection complete message 440), and the UE may transmit data to and receive data from the RAT2 base station via the resumed connection (e.g., the connection 442).

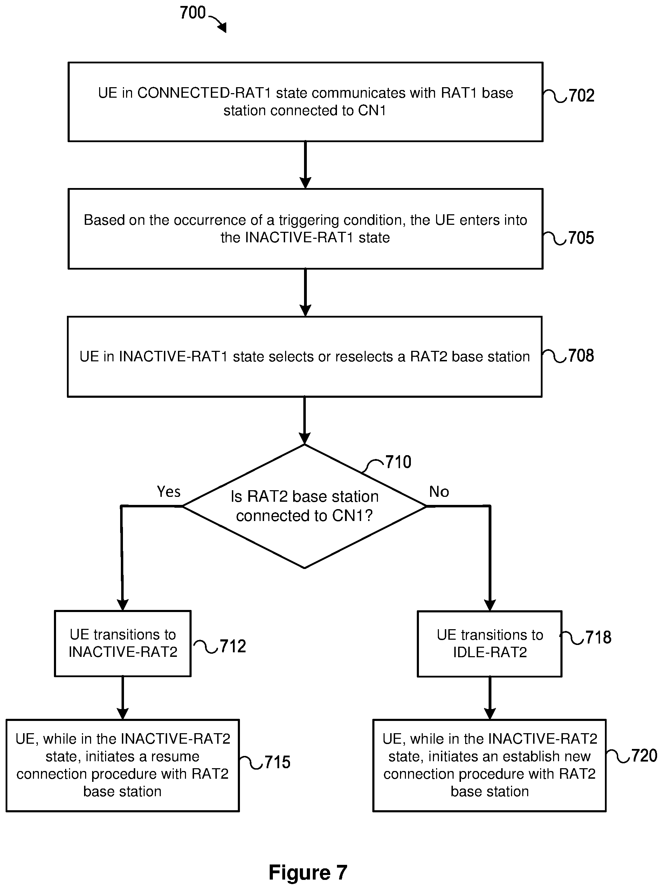

FIG. 7 depicts a flow diagram of another example method 700 in a UE that supports multiple types of RATs, in accordance with one or more of the techniques disclosed within this document. For example, the UE may be the UE 120 of FIG. 1 or the UE 402 of FIG. 4, and the multiple RATs may include NR, EUTRA, and/or other types of RATs. Generally speaking, at least some of the method 700 may be executed in conjunction with the message flow 400 of FIG. 4 and/or in accordance with the state diagram 300 of FIG. 3, and the description of the method 700 below simultaneously references FIGS. 3-4 for clarity of illustration (and not limitation) purposes. Further, in some embodiments, at least portions of the method 600 may execute in conjunction with at least portions of the method 600, and/or in conjunction with one or more other methods described within this document. Still further, in some embodiments, the method 700 includes one or more alternate and/or additional actions other than those shown in FIG. 7.

At a block 702, a UE that is in a connected state corresponding to a first type of RAT (e.g., a UE that is in the CONNECTED-RAT1 state 312) communicates with a first base station of a wireless communication system, where the first base station supports the first RAT and the first base station connects to a Core Network of a first type, such as 5GC, EPC, or another type of CN. For example, the first RAT1 base station may be the first RAT1 base station 102 of FIG. 1 or the first RAT1 base station 405 of FIG. 4, and the Core Network may be the CN1 108 or the CN2 110 of FIG. 1. The UE may transmit and/or receive control-plane data and user-plane data to/from the wireless communication system via the first RAT1 base station via an established wireless connection, such as the connection 412. As such, the UE is configured for transmitting and receiving data via the wireless connection with the RAT1 base station. The UE may integrity protect, integrity check, encrypt, and decrypt the communicated control-plane data and user-plane data using various keys and/or configurations, such in a manner similar to that described above with respect to FIG. 4.

At a block 705, based on an occurrence of a triggering condition, the UE enters into an inactive state corresponding to RAT1 (e.g., the INACTIVE-RAT1 state 325). An example of a triggering condition is the reception, by the UE, of a message or command, generated by the RAT1 base station, instructing the UE to enter into the inactive state. Another example of a triggering condition is the autonomous detection, by the UE, that no or insufficient data activity has occurred over the connection with the RAT1 base station for some pre-determined duration of time. Of course, other triggering conditions may be possible. At any rate, in response to the occurrence of the triggering condition, the UE may transition from the CONNECTED-RAT1 state into the INACTIVE-RAT1 state (block 705).

At a block 708, while the UE is in the inactive state corresponding to RAT1, the UE may select or reselect a second base station via which the UE may resume its connection with the wireless communication system, where the second base station is configured to support a second type of RAT. For example, the second RAT2 base station may be the RAT2 base station 105 of FIG. 1 or the RAT2 base station 408 of FIG. 4. With respect to selection and reselection, the UE may select the second RAT2 base station when the UE is not camped onto any base station, and the UE may reselect the second RAT2 base station when the UE is camped onto another base station. Generally speaking, the UE may select/reselect the second RAT2 base station based on measurements, cell identity, and/or other criteria such as previously described.

At a block 710, the method 700 determines whether or not the RAT2 base station is connected to the same (or the same type of) CN as the CN to which the RAT1 base station is connected. When the RAT1 base station and the RAT2 base station are both connected to the same CN or to the same type of CN (the "yes" leg of block 710), the method 700 includes the UE transitioning from the inactive state corresponding to RAT1 into an inactive state corresponding to RAT2 (block 712). For example, the UE may transition from INACTIVE-RAT1 state 325 into the INACTIVE-RAT2 state 322.

In some implementations, when the RAT1 base station and the RAT2 base station are both connected to the same CN or to the same type of CN (the "yes" leg of block 710), the UE may further determine whether or not the RAT2 base station supports requesting UE context from an inter-RAT base station (not shown in FIG. 7). For example, the RAT2 base station may broadcast system information indicating whether or not the RAT2 base station supports requesting UE context from an inter-RAT base station, and the UE may receive the broadcasted system information from a cell of the RAT2 base station. When the broadcasted system information indicates that the RAT2 base station does support requesting UE context from an inter-RAT base station, the UE transitions from INACTIVE-RAT1 state 325 into the INACTIVE-RAT2 state 322 (block 712). Otherwise, when the broadcasted system information indicates that the RAT2 base station does not support requesting UE context from an inter-RAT base station, the UE transitions from INACTIVE-RAT1 state 325 into the IDLE-RAT2 state 320 (block 718). In other implementations, when the RAT1 base station and the RAT2 base station are both connected to the same CN or to the same type of CN (the "yes" leg of block 710), the UE transitions from INACTIVE-RAT1 state 325 into the INACTIVE-RAT2 state 322 (block 712) irrespective of whether or not the RAT2 base station supports requesting UE context from an inter-RAT base station.

At block 715, while the UE is in the inactive state corresponding to RAT2, the UE may initiate a resume connection procedure with the RAT2 base station to thereby resume its previous connection with the wireless communication system. For example, the UE may initiate the resume connection procedure in a manner similar to that discussed above with blocks 612 and 615 of FIG. 6, and/or the UE may initiate the resume connection procedure indicated in FIG. 4 by references 425-442.

Returning now to the block 710, when the RAT1 base station and the RAT2 base station are respectively connected to CNs of different types (the "no" leg of block 710), the method 700 includes the UE transitioning from the inactive state corresponding to RAT1 into an idle state corresponding to RAT2 (block 718). For example, the UE may transition from INACTIVE-RAT1 state 325 into the IDLE-RAT2 state 320.

Subsequently, at a block 720, while in the idle state corresponding to RAT2, the UE may initiate or establish a new connection procedure with the RAT2 base station. For example, the UE may initiate the establish new connection procedure by transmitting a request to setup a new or initial connection with the RAT2 base station (e.g., an *RRCConnectionRequest* when the RAT2 base station is EUTRA, or a *RRCSetupRequest* when the RAT2 base station is NR), and upon completion of the setup, the UE and the RAT2 base station may perform an initial security activation procedure, a UE capability transfer procedure, and a reconfiguration procedure to thereby configure the UE to communicate with the system via the RAT2 base station. Upon completion of the configuration, the UE may enter into the CONNECTED-RAT2 state, for example.

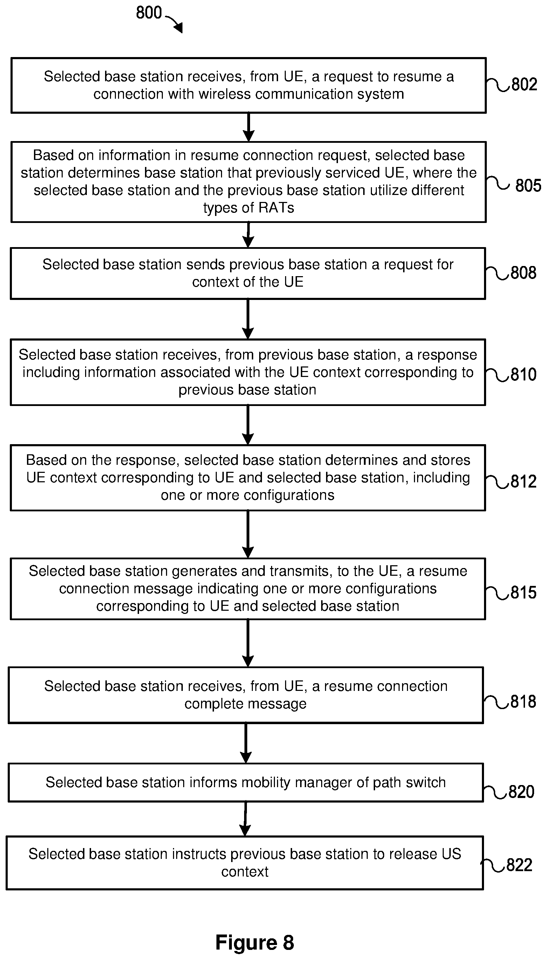

FIG. 8 depicts a flow diagram of an example method 800, in a base station, for resuming a connection between the UE and a wireless communication system via the base station, in accordance with at least some of the principles and techniques disclosed within this document. In an example, the base station is the RAT2 base station 105 of FIG. 1 or the RAT2 base station 408 of FIG. 4, and the UE is the UE 120 of FIG. 1 or the UE 402 of FIG. 4. The base station in which the method 800 executes may be configured to support a particular Radio Access Technology, such as NR, EUTRA, or another type of RAT. Further, the base station in which the method 800 executes may have been selected or reselected by the UE as a base station via which the UE is to resume its connection with the wireless communication system, e.g., a "selected" base station. The UE may have selected or reselected the base station while the UE was in an inactive state of a protocol of a different RAT than the RAT supported by the selected base station (e.g., while the UE was in the INACTIVE-RAT1 state 325 when the selected base station supports RAT2, or while the UE was in the INACTIVE-RAT2 state 322 when the selected base station supports RAT1), such as previously discussed with respect to the message flow 400 of FIG. 4. Generally speaking, at least some of the method 800 may be executed conjunction with the message flow 400 of FIG. 4, and the description of the method 800 below simultaneously references FIG. 4 for clarity of illustration (and not limitation) purposes. Further, in some embodiments, at least portions of the method 800 may execute in conjunction with at least portions of one or more other methods described within this document. Still further, in some embodiments, the method 800 includes one or more alternate and/or additional actions other than those shown in FIG. 8 and/or discussed below with respect to FIG. 8.

At a block 802, the method 800 may include receiving, at processing hardware of a base station of a wireless communication system, from a User Equipment (UE) via a wireless channel corresponding to a Radio Access Technology (RAT), a request to resume a connection of the UE with the wireless communication system via the base station utilizing the RAT. In some scenarios, the UE may have selected or reselected the base station while the UE was in an inactive state corresponding to a protocol of a RAT that is different than the current RAT via which the base station received the request to resume connection. For example, the UE may have selected or reselected the base station while the UE was in the inactive state of the different, previously-utilized RAT, such as previously discussed with respect to block 422 of FIG. 4, and the request to resume the connection received at the selected base station from the UE may be the request 425 of FIG. 4.

The request to resume the UE's connection with the wireless system via the selected base station may include information such as an indication (e.g., an I-RNTI or other type of identifier). The selected base station may identify, based on the received indication, another base station that was previously servicing the UE's connection to wireless communication system utilizing the previous RAT. For example, the previously servicing base station may be the base station 102 of FIG. 1 or the base station 405 of FIG. 4, the current RAT utilized by the selected base station may be one of NR or EUTRA, and the previous RAT utilized by the previously servicing base station may be the other one of NR or EUTRA. Additionally or alternatively, the request to resume the UE's connection received by the selected base station may include other information such as a resume message authentication code for integrity protection, a resume cause, and/or other parameters and/or information, such as described elsewhere within this document. For ease of discussion, the description of FIG. 8 refers to the previously servicing base as the "previous" base station, the RAT utilized by the previous base station as the "previous" RAT, and the RAT utilized by the selected base station as the "current" RAT.

At a block 805, the method 800 may include determining, by the processing hardware of the selected base station and based on the information included in the request to resume the UE's connection with the wireless communication system, an identity of the previous base station. For example, the selected base station may determine the identity of the previous base station based on the indication or information included in the received request to resume connection message.

At a block 808, the method 800 may include sending or transmitting, by the processing hardware of the selected base station to the previous base station, a request for a context corresponding to connection of the UE to the wireless communication system via the previous base station, e.g., so that the selected base station may utilize the requested information to configure itself and/or to configure the UE for resuming the connection of the UE with the system via the selected base station. For example, the request for the context of the UE may be the request 428, and may include the identification (e.g., the I-RNTI) that was included in the request to resume the UE's connection 425, the resume message authentication code, and an indication or identity of a cell of the selected base station at which the request to resume the UE's connection was received, for example.

At a block 810, the method 800 may include receiving, by the processing hardware of the selected base station, information associated with the connection of the UE with the wireless communication system via the previous base station, which may include one or more keys, configurations, and/or other data. For example, the selected base station may receive, from the previous base station, a response 432 to its request for UE context 428. In an embodiment, the response to the selected base station's request for UE context includes information that the previous base station retrieved from a context of the UE stored at the previous base station, such as from the UE context 420 stored in an Access Stratum at the RAT1 base station 405. In an embodiment, the response to the selected base station's request for UE context includes an update, modification, and/or derivation of information that the previous base station retrieved from the context of the UE stored at the previous base station. For example, the previous base station may have retrieved information from the stored UE context, updated a key included in the retrieved information based on the identity of the cell of the selected base station, and provided the updated key to the selected base station in the response to the selected base station's request for UE context.

At any rate, at a block 812, upon receiving UE context information corresponding to the UE's connection with the wireless communication system via the previous base station, the selected base station may determine and store context information corresponding to the connection between the UE and the wireless communication system via the selected base station. For example, the selected base station may transfer or copy at least some the received UE context information corresponding to the connection of the UE with the previous base station into a locally-accessible context corresponding to the connection of the UE via the selected base station, e.g., for storage. Additionally or alternatively, the selected base station may update, modify, and/or derive at least some of received UE context information corresponding to the connection of the UE with previous base station into context information corresponding to the connection of the UE via the selected base station (e.g., by deriving different keys, etc.), and may store the updated, modified, and/or derived UE context information into the locally-accessible context.

The stored, locally-accessible context information corresponding to the connection between the UE and the selected base station may include, for example, a key corresponding to the selected base station, an integrity protection key, a control-plane encryption/decryption key, a user-plane encryption/decryption key, a Robust Header Compression (ROHC) state, a Cell Radio Network Temporary Identifier (C-RNTI) used in a source personal cell (PCell) of the selected base station, a target cell identity of the PCell, a physical cell identity of the PCell, respective identities of a first Signaling Radio Bearer (SRB 1), a second Signaling Radio Bearer (SRB2), and a Digital Radio Bearer (DRB), and/or other parameters associated with the configuration of the connection between the and the selected base station. The selected base station may store the determined UE context information in a local instance of an Access Stratum 435 associated with the UE, or in some other suitable storage mechanism that is accessible to the selected base station.

At a block 815, the method 800 may include generating, by the processing hardware of the selected base station and based on the locally-accessible UE context information, a response to the request to resume the connection of the UE with the wireless communication system via the selected base station, and transmitting the generated response to the UE. For example, the selected base station may generate a resume connection message 438 based on the UE's locally-accessible AS 435, and may transmit the generated resume connection message to the UE. The resume connection message indicates configuration and/or other data that the UE may utilize to establish and maintain the connection of the UE with the wireless communication system via the selected base station, and optionally other context information, such as described elsewhere within this document.

At a block 818, the method 800 may include receiving, by the processing hardware of the selected base station from the UE, a response to the previously transmitted request to resume the connection of the UE with the wireless communication system via the selected base station, where the received response indicates that the UE has completed configuring itself to resume the connection between the wireless communication system via the selected base station, and is ready to transmit and receive data via the resumed connection. For example, the selected base station may receive a resume connection complete message 440 from the UE. Accordingly, the selected base station may transmit data to and receive data from the UE via the resumed connection, e.g., such as discussed with respect to reference 442.

At a block 820, the method 800 may include informing, by the processing hardware of the selected base station, a mobility manager component of the core network of the resumed connection of the UE via the selected base station. For example, when the selected base station connects to an NR core network, the selected base station may generate and transmit a request path switch message 445 to the AMF of the NR core network, and when the selected base station connects to an EPC core network, the selected base station may generate and transmit a request path switch message 445 to the MME of the EPC core network. Subsequently, the selected base station may receive a corresponding response or acknowledgement from the mobility manager. For example, the selected base station may receive a path switch response message 448 from the AMF/MME 410.

At a block 822, upon receiving the response or acknowledgement of the path switch from the mobility manager, the selected base station may instruct the previous base station to release, delete, and/or clear the UE context information that is locally stored and/or accessible to the previous base station which, as previously discussed, may include key information, configuration information, and/or other data that governed the connection of the UE with the wireless communication system via the previous base station. For example, the selected base station may transmit a release UE context instruction 450 to the previous base station, and upon the reception of the release UE context instruction 450, the previous base station may release, delete, and/or clear the UE context information 452 that is locally accessible to the previous base station (e.g., by releasing the local instance of the UE's AS), thereby freeing up resources at the previous base station for other tasks and actions.

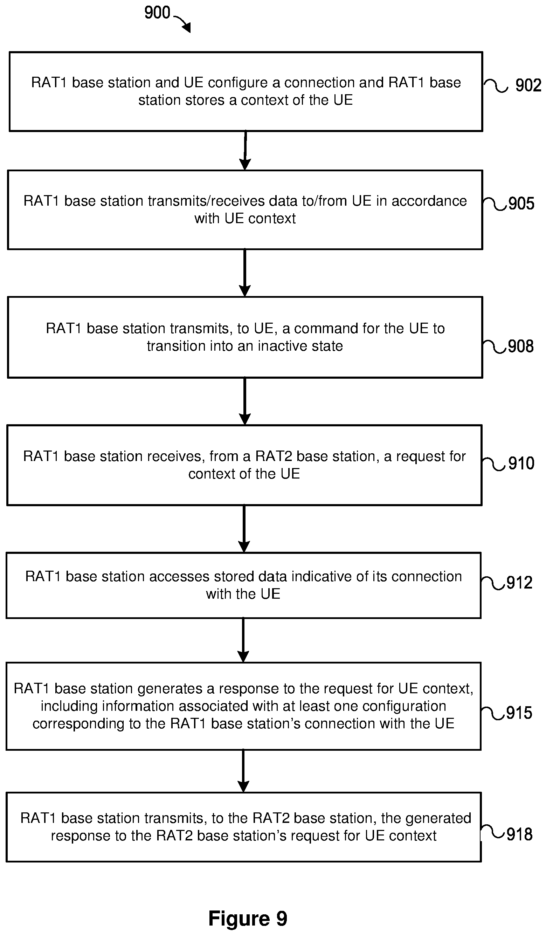

FIG. 9 is a flow diagram of an example method 900, in a first base station of a first type of RAT via which a UE is or was connected to a wireless communication system, for resuming the connection between the UE and the wireless communication system via another, second base station of a second, different type of RAT, in accordance with at least some of the principles and techniques disclosed within this document. For example, the base station may be the RAT1 base station 102 of FIG. 1 or the RAT1 base station 405 of FIG. 4. The first base station and the second base stations may be inter-RAT base stations. For example, the first base station of FIG. 9 may be configured to support a first Radio Access Technology, e.g., RAT1, which may be NR, EUTRA, or another type of RAT, and the second base station of FIG. 9 may be configured to support a second RAT, e.g., RAT2, that is different than RAT1. Generally speaking, at least some of the method 900 may be executed conjunction with the message flow 400 of FIG. 4, and the description of method 900 below simultaneously references FIG. 4 for clarity of illustration (and not limitation) purposes. Further, in some embodiments, at least portions of the method 900 may execute in conjunction with at least portions of one or more other methods described within this document. Still further, in some embodiments, the method 900 includes one or more alternate and/or additional actions other than those shown in FIG. 9 and/or discussed below with respect to FIG. 9.

At a block 902, the method 900 may include configuring, by a first base station supporting a first type of RAT, a connection of the UE with the wireless communication system via the first base station. For example, the first base station and the UE may perform a portion of the message flow illustrated in FIG. 8, a portion of the message flow illustrated in FIG. 9, and/or one or more other connection establishment procedures, such as a security activation procedure, a UE capability discover and/or a UE capability transfer procedure, and/or a configuration or re-configuration procedure.

The first base station may store information or data indicative of the context of the connection between the first base station and the UE. Context information may include, for example, one or more keys used for security, encryption, and/or decryption, one or more configurations of various radio resources, signaling radio bearers, data radio bearers, physical layers, medium access control, cells, cell groups, etc., and/or other types of data that govern the connection established between the first base station and the UE and utilized to deliver data, such as described elsewhere within this document. In an example implementation, the first base station may store the context of the connection between the first base station and the UE in an instance of an Access Stratum of the UE or other data storage mechanism that is stored at or otherwise locally accessible to the first base station. Additionally, upon configuring the connection between the first base station and the UE, the UE enters into a connected state of a protocol corresponding to RAT1 utilized by the first base station, e.g., into the CONNECTED-RAT1 state 312. At a block 905 the method 900 may include delivering (e.g., transmitting and/or receiving) control-plane and/or user-plane data between the UE and the first base station via the configured, established connection, e.g., in a manner such as discussed with respect to reference 412 of FIG. 4.

At some point in time after the UE has entered into the CONNECTED-RAT1 state, the first base station may determine or detect a condition that causes the first base station to instruct the UE to enter into an inactive state of the RAT1 protocol, e.g., into the INACTIVE-RAT1 state 325. As such, at a block 908, the method 900 may include transmitting, by processing hardware of the first base station to the UE, a command that instructs the UE to inactivate or enter into the inactive state. For example, the first base station may transmit an inactivate command to the UE (such as the inactivate command 418 of FIG. 4) upon detecting that insufficient (e.g., less than a threshold amount) of data or no data has been transferred between the first base station and the UE over the configured, established connection for some pre-determined duration of time, or upon detecting some other condition that requires the UE to inactivate. The base station may maintain the context of the UE, though, e.g., as previously discussed with respect to reference 420.

Subsequent to commanding the UE to inactivate (block 908), the method 900 may include receiving, at the processing hardware of the first base station from the second base station, a request for information corresponding to a context of the UE with respect to the previously established connection of the UE with the wireless communication system via the previous base station (block 910). For example, the first base station may receive a request 428 for UE context from the second base station. The request for context may include information or data based on which the second base station may verify that the request is a valid request. For example, the received request for context may include a message authentication code value, which the first base station may compare against a message authentication code value that the first base station generates based on information stored in the UE context 420 and optionally based on the identification of a cell of the second base station. If the received message authentication code value and the generated message authentication code value match or otherwise are consistent, then the first base station considers the received request for UE context as a valid request. Additionally or alternatively, the first base station may utilize other data included in the request for context to verify the validity of the request.

Upon an affirmative verification of the received request, at a block 912, the method 900 may include accessing, by the processing hardware of the first base station, the stored information or data that is indicative of the context of the UE with respect to the previously established connection of the UE with the wireless communication system via the previous base station. The first base station may have stored at least a portion of the information or data with respect to block 902, such as in the AS of the UE 420, or in some other suitable data storage area that is accessible to the first base station. The accessed, stored information or data may include keys, configurations, and/or other types of data that govern the connection between the UE and the first base station, such as discussed elsewhere within this document.

At a block 915, the method 900 includes generating, by the processing hardware of the first base station, and based on the accessed, stored information or data that is indicative of the context of the UE with respect to the previously established connection of the UE with the wireless communication system via the previous base station, a response to the request for UE context. For example, the first base station may generate the response 432 to the request 428. At a block 918, the first base station may transmit the generated response to the second base station. The generated response may include information associated with one or more configurations corresponding to the previously established connection of the UE with the wireless communication system via the previous base station, which may include at least some accessed data or information corresponding to the block 912. For example, the generated response may include an entirety of the stored context of the UE or may include only a subset of the configurations and/or other data of the stored context of the UE. In an embodiment, the generated response includes a value of a Next Hop Chaining Count value and a key corresponding to the second base station. Additionally or alternatively, the generated response may include information that the first base station has derived from the accessed, stored UE context, and that is indicative of a resumption of the connection of the UE with the wireless communication system via the second base station. For example, the first base station may derive, from its locally-accessible context of the UE, a key corresponding to the second base station or a configuration that is able to govern the resumed connection between the UE and the second base station and the first base station may include the derived key or configuration in the response to the second base station.

Accordingly, as demonstrated above, the methods and techniques disclosed within this document provide significant advantages over known techniques for the handling of devices, such as User Equipment, that are in an inactive state. For example, using the methods and techniques disclosed within this document, from the perspective of the UE in an inactive state of a radio resource control protocol, the UE transmits, receives, and processes a significantly fewer number of messages between the UE and the selected base station to resume its connection and begin transmitting/receiving data payload with a wireless communication system as compared with known techniques. For example, referring to FIG. 4, when the UE 402 is in an INACTIVE-RAT1 state and transitions into INACTIVE-RAT2 state upon (re)selection of a base station, the UE 402 processes three messages (e.g., a request to resume connection 425, a resume connection 438, and a resume connection complete 440) to thereby transition into a CONNECTED-RAT2 state and be able to (e.g., be configured to) transmit and receive control-plane and user-plane data 442 via the selected base station.

On the other hand, and as previously discussed, with known prior art techniques, when a UE is in an INACTIVE state of a first RAT and transitions into an IDLE state of a second RAT upon its selection of a RAT2 base station, the UE must not only process several messages in order to set up the initial connection with the RAT2 base station, but the UE further must execute a entire set of other procedures (e.g., an initial security activation procedure, a UE capability transfer procedure, a reconfiguration procedure, etc.) so that the UE is properly configured to transmit and receive control-plane and user-plane data via the RAT2 base station. Each of these procedures requires yet another respective set of messages to be transferred between the UE and to the RAT2 base station, as well as a respective amount of time to perform the procedure, thereby delaying the transfer of data payload between the UE and the wireless communication system, and unnecessarily adding network traffic and congestion on the wireless links supported by the second base station.

Moreover, the methods and techniques disclosed within this document explicitly inform the first, previously servicing base station of the resumption of the connection of the UE with the wireless communication system via the selected base station (e.g., per the release UE context message 450 of FIG. 4). As such, the first base station frees up its resources related to maintaining the UE context (such as memory, timers, CPU processing, etc.) more quickly for other uses (e.g., per reference 452 of FIG. 4). In contrast, known, prior art techniques typically require the first base station to infer, over some unnecessary duration of time, that the UE is no longer connected to the system via the first base station (e.g., due to a timer expiration) before the first base station frees up its resources related to maintaining the UE context.

The following additional considerations apply to the foregoing discussion.

A user device or User Equipment (UE) in which the techniques of this disclosure can be implemented (e.g., the UE 120 or the UE 402) can be any suitable device capable of wireless communications such as a smartphone, a tablet computer, a laptop computer, a mobile gaming console, a point-of-sale (POS) terminal, a health monitoring device, a drone, a camera, a media-streaming dongle or another personal media device, a wearable device such as a smartwatch, a wireless hotspot, a femtocell, or a broadband router. Further, the user device in some cases may be embedded in an electronic system such as the head unit of a vehicle or an advanced driver assistance system (ADAS). Still further, the user device can operate as an internet-of things (IoT) device or a mobile-internet device (MID). Depending on the type, the user device can include one or more general-purpose processors, a computer-readable memory, a user interface, one or more network interfaces, one or more sensors, etc.

Certain embodiments are described in this disclosure as including logic or a number of components or modules. Modules may can be software modules (e.g., code stored on non-transitory machine-readable medium) or hardware modules. A hardware module is a tangible unit capable of performing certain operations and may be configured or arranged in a certain manner. A hardware module can include dedicated circuitry or logic that is permanently configured (e.g., as a special-purpose processor, such as a field programmable gate array (FPGA) or an application-specific integrated circuit (ASIC)) to perform certain operations. A hardware module may also include programmable logic or circuitry (e.g., as encompassed within a general-purpose processor or other programmable processor) that is temporarily configured by software to perform certain operations. The decision to implement a hardware module in dedicated and permanently configured circuitry, or in temporarily configured circuitry (e.g., configured by software) may be driven by cost and time considerations.

When implemented in software, the techniques can be provided as part of the operating system, a library used by multiple applications, a particular software application, etc. The software can be executed by one or more general-purpose processors or one or more special-purpose processors.

Upon reading this disclosure, those of skill in the art will appreciate still additional alternative structural and functional designs for enhancing the handling of user equipment in a radio resource control inactive state through the principles disclosed in this disclosure. Thus, while this document illustrates and describes particular embodiments and applications, the disclosed embodiments are not limited to the precise construction and components disclosed. Various modifications, changes and variations, which will be apparent to those of ordinary skill in the art, may be made in the disclosed arrangement, operation and details of the method, and apparatus without departing from the scope defined in the appended claims.

## Claims

1. A method (800) in a base station (105) of a wireless communication system (100) that utilizes a second Radio Access Technology, RAT, the method comprising:
receiving (802), by the base station (105), a request of a User Equipment (120), UE, to resume a suspended connection of the UE (120) with the wireless communication system (100) via the base station (105), the request of the UE (120) including a resume message authentication code generated by the LTE (120) based on a cell identity of the base station (105) and an integrity protection algorithm configured by a previous base station (102) that previously serviced the connection of the UE (120) with the wireless communication system (100) utilizing a first RAT;
determining (805), by the base station (105) and based on information included in the request of the UE (120) to resume the suspended connection, an identity of the previous base station (102);
transmitting (808), by the base station (105) to the previous base station (102), a request for information corresponding to the connection of the UE (120) with the wireless communication system (100) via the previous base station (102) utilizing the first RAT, the request for information including the resume message authentication code;
receiving (810), by the base station (105) from the previous base station (102), information associated with the one or more configurations corresponding to the connection of the UE (120) with the wireless communication system (100) via the previous base station (102) utilizing the first RAT, the received information including an indication of at least one of a signaling radio bearer configuration, a data radio bearer configuration, a radio resource configuration, or a measurement configuration;
generating (812), by the base station (105) and based on the information received from the previous base station (102), one or more configurations corresponding to resuming the suspended connection of the UE (120) with the wireless communication system (100) via the base station (105) utilizing the second RAT; and
transmitting (818), by the base station (105) to the UE (120), a response to the request of the LTE (120), the response indicating the one or more configurations.

2. The method (800) of claim 1, wherein the base station (105) connects to a Core Network (108), CN, and the previous base station (102) connects to the CN (108).

3. The method (800) of claim 2, wherein the CN (108) is a 5GC core network, the first RAT is one of New Radio, NR, or Evolved Universal Terrestrial Radio Access, EUTRA, and the second RAT is the other one of NR or EUTRA.

4. The method (800) of claim 3, wherein either:
the second RAT is EUTRA and the request of the UE (120) to resume the suspended connection is an *RRCConnectionResumeRequest* message; or
the second RAT is NR and the request of the UE (120) to resume the suspended connection is an *RRCResumeRequest* message.

5. The method (800) of any one of the preceding claims, wherein the resume message authentication code is generated by the UE (120) further based on the identity of the previous base station (102), a Cell Radio Network Temporary Identifier, C-RNTI, received by the UE (120) from the previous base station (102), a base station key associated with the previous base station (102), and/or an integrity key.

6. The method (800) of any one of the preceding claims, wherein:
receiving (810), by the base station (105) from the previous base station (102), the information associated with the one or more configurations corresponding to the connection of the UE (120) with the wireless communication system (100) via the previous base station (102) utilizing the first RAT includes receiving, by the base station (105) from the previous base station (102), at least one of: a key corresponding to the previous base station K_{BS1}, a key corresponding to the base station K_{BS2}, or a Next Hop Chaining Count value; and
the method further comprises:
deriving, by the base station (105) and based on at least one of the key corresponding to the previous base station K_{BS1} or the Next Hop Count Chaining value, the key corresponding to the base station K_{BS2}; and
deriving, by the base station (105) and based on at least one of the key corresponding to the base station K_{BS2} or the Next Hop Count Chaining value, at least one of: an integrity key Kᵢₙₜ, a control-plane data encryption key K_{CPenc}, or a user-plane data encryption key K_{UPenc}.

7. The method (800) of claim 6, wherein the method further comprises at least one of:
utilizing the integrity key Kᵢₙₜ to integrity protect control-plane data for transmission from the base station (105) to the previous base station (102);
utilizing the control-plane data encryption key K_{CPenc} to encrypt the integrity-protected control-plane data for transmission from the base station (105) to the previous base station (102);
utilizing the integrity key Kᵢₙₜ to integrity protect control-plane data for transmission from the base station (105) to the UE (120);
utilizing the control-plane data encryption key K_{CPenc} to encrypt the integrity-protected control-plane data for transmission from the base station (105) to the UE (120);
utilizing the control-plane data encryption key K_{CPenc} to decrypt control-plane data that the base station (105) receives from the UE (120);
utilizing the integrity key Kᵢₙₜ to check an integrity of the decrypted control-plane data that the base station (105) receives from the UE (120);
utilizing the control-plane data encryption key K_{CPenc} to decrypt control-plane data that the base station (105) receives from the previous base station (102);
utilizing the integrity key Kᵢₙₜ to check an integrity of the decrypted control-plane data that the base station (105) receives from the previous base station (102);
utilizing user-plane data encryption key K_{UPenc} to encrypt user-plane data for transmission from the base station (105) to the LTE (120); or
utilizing the user-plane data encryption key K_{UPenc} to decrypt user-plane data for transmission from the base station (105) to the UE (120).

8. The method (800) of any one of the preceding claims, wherein generating (812), by the base station (105), the one or more configurations corresponding to resuming the suspended connection between the UE (120) and the base station (105) utilizing the second RAT includes determining, by the base station (105), at least one NR configuration corresponding to resuming the suspended connection between the UE (120) and the base station (105) utilizing the second RAT, the determination based on the at least some of the requested information received at the base station (105) from the previous base station (102).

9. The method (800) of any one of the preceding claims, wherein transmitting (818), to the UE (120), the response to the request of the UE (120) includes transmitting, to the UE (120), at least one of:
i) an indication of one or more EUTRA configurations, the one or more EUTRA configurations including at least one of: a EUTRA radio resource configuration, a EUTRA data radio bearer, DRB, robust header compression ROHC continue configuration, or a EUTRA measurement configuration; or
ii) an indication of one or more NR configurations, the one or more NR configurations including at least one of: a NR cell group configuration, a NR measurement configuration, or a NR radio bearer configuration.

10. The method (800) of claim 9, wherein:
transmitting (818), to the UE (120), the response to the request of the UE (120) includes transmitting the indication of one or more EUTRA configurations to the UE (120);
the indication of one or more EUTRA configurations includes the EUTRA radio resource configuration; and
the EUTRA radio resource configuration includes at least one of:
a physical layer configuration;
a medium access control configuration;
a first EUTRA signaling radio bearer, SRB, configuration that optionally includes a first radio link control, RLC, configuration corresponding to a EUTRA SRB1;
a second EUTRA SRB configuration that optionally includes a second RLC configuration corresponding to a EUTRA SRB2; or
a EUTRA DRB configuration that optionally includes a RLC configuration corresponding to a EUTRA DRB.

11. The method (800) of claim 9 or 10, wherein:
transmitting (818), to the UE (120), the response to the request of the UE (120) includes transmitting the indication of one or more NR configurations to the UE (120);
the indication of one or more NR configurations includes the NR cell group configuration; and
the NR cell group configuration includes at least one of:
a cell group identity;
a physical layer configuration;
a medium access control configuration;
a special cell configuration;
a first RLC bearer configuration corresponding to, and optionally including an identification of, NR SRB 1;
a second RLC configuration corresponding to, and optionally including an identification of, NR SRB2; or
a third RLC configuration corresponding to, and optionally including an identification of, an NR DRB.

12. The method (800) of any one of the preceding claims, wherein receiving (810), by the base station (105) from the previous base station (102), the information associated with the one or more configurations corresponding to the connection of the UE (120) with the wireless communication system (100) via the previous base station (102) utilizing the first RAT includes receiving by the base station (105) from the previous base station (102), at least one of:
a current K_{BS*x*} key corresponding to one of the base station (105) or the previous base station (102),
a current K_{BS*y*} key corresponding to the other one of the base station (105) or the previous base station (102);
a current integrity key Kᵢₙₜ corresponding to the integrity protection algorithm,
a ROHC state,
a C_RNTI used in a source personal cell, PCell, corresponding to the previous base station (102),
a target cell identity of the source PCell,
a physical cell identity of the source PCell, or
one or more other configuration parameters.

13. The method (800) of any one of the preceding claims, further comprising storing, by the base station (105), the one or more configurations corresponding to resuming the suspended connection of the UE (120) with the wireless communication system (100) via the base station (105) utilizing the second RAT in an instance of an Access Stratum corresponding to the UE (120) that is accessible to the base station (105).

14. The method (800) of any one of the preceding claims, further comprising:
receiving (818), by the base station (105) from the UE (120), an indication of a resumption of the suspended connection between the UE (120) and the wireless communication system (100) via the base station (105); and
based on the reception of the indication of the resumption of the suspended connection of the UE (120) with the wireless communication system (100) via the base station (105), transmitting (820), by the base station (105) to a mobility manager component of a core network connected to the base station (105), an indication of the resumed connection of the UE (120) to the wireless communication system (100) via the base station (105), and
optionally, the method further comprises transmitting (822), by the base station (105) to the previous base station (102), an indication to at least one of release, clear, or delete the information corresponding to the connection of the UE (120) with the wireless communication system (100) via the previous base station (102) utilizing the first RAT.

15. A system configured to perform a method according to any one of the preceding claims.

## Patentansprüche

1. Verfahren (800) in einer Basisstation (105) eines drahtlosen Kommunikationssystems (100), die eine zweite Funkzugangstechnologie, RAT, nutzt, wobei das Verfahren umfasst:
durch die Basisstation (105) erfolgendes Empfangen (802) einer Anforderung einer Benutzereinrichtung (120), UE, eine unterbrochene Verbindung der UE (120) mit dem drahtlosen Kommunikationssystem (100) über die Basisstation (105) wiederaufzunehmen, wobei die Anforderung der UE (120) einen Wiederaufnahmenachricht-Authentifizierungscode einschließt, der durch die UE (120) auf der Grundlage einer Zellenidentität der Basisstation (105) und eines Integritätsschutzalgorithmus erzeugt wird, der durch eine vorherige Basisstation (102) konfiguriert wurde, die zuvor die Verbindung der UE (120) mit dem drahtlosen Kommunikationssystem (100) unter Nutzung einer ersten RAT bediente;
Bestimmen (805) einer Identität der vorherigen Basisstation (102) durch die Basisstation (105) und auf der Grundlage von Informationen, die in der Anforderung der UE (120), die unterbrochene Verbindung wiederaufzunehmen, eingeschlossen sind;
Übertragen (808) einer Anforderung von Informationen, die der Verbindung der UE (120) mit dem drahtlosen Kommunikationssystem (100) über die vorherige Basisstation (102) unter Nutzung der ersten RAT entsprechen, durch die Basisstation (105) zu der vorherigen Basisstation (102), wobei die Anforderung von Informationen den Wiederaufnahmenachricht-Authentifizierungscode einschließt;
durch die Basisstation (105) erfolgendes Empfangen (810) von Informationen von der vorherigen Basisstation (102), die der einen oder den mehreren Konfigurationen zugeordnet sind, die der Verbindung der UE (120) mit dem drahtlosen Kommunikationssystem (100) über die vorherige Basisstation (102) unter Nutzung der ersten RAT entsprechen, wobei die empfangenen Informationen eine Angabe von mindestens einem von Folgendem einschließen: eine Signalisierungsfunkträgerkonfiguration, eine Datenfunkträgerkonfiguration, eine Funkressourcenkonfiguration oder eine Messungskonfiguration;
Erzeugen (812) einer oder mehrerer Konfigurationen, die dem Wiederaufnehmen der unterbrochenen Verbindung der UE (120) mit dem drahtlosen Kommunikationssystem (100) über die Basisstation (105) unter Nutzung der zweiten RAT entsprechen, durch die Basisstation (105) und auf der Grundlage der von der vorherigen Basisstation (102) empfangenen Informationen; und
Übertragen (818) einer Antwort auf die Anforderung der UE (120) durch die Basisstation (105) zu der UE (120), wobei die Antwort die eine oder die mehreren Konfigurationen angibt.

2. Verfahren (800) nach Anspruch 1, wobei die Basisstation (105) sich mit einem Kernnetz (108), CN, verbindet und die vorherige Basisstation (102) sich mit dem CN (108) verbindet.

3. Verfahren (800) nach Anspruch 2, wobei das CN (108) ein 5GC-Kernnetz ist, die erste RAT eines von New Radio, NR, oder Evolved Universal Terrestrial Radio Access, EUTRA, ist und die zweite RAT das andere von NR oder EUTRA ist.

4. Verfahren (800) nach Anspruch 3, wobei entweder:
die zweite RAT EUTRA ist und die Anforderung der UE (120), die unterbrochene Verbindung wiederaufzunehmen, eine *RRCConnectionResumeRequest-*Nachricht ist; oder
die zweite RAT NR ist und die Aufforderung der UE (120), die unterbrochene Verbindung wiederaufzunehmen, eine *RRCResumeRequest-*Nachricht ist.

5. Verfahren (800) nach einem der vorhergehenden Ansprüche, wobei der Wiederaufnahmenachricht-Authentifizierungscode durch die UE (120) ferner auf der Grundlage der Identität der vorherigen Basisstation (102), einer durch die UE (120) von der vorherigen Basisstation (102) empfangenen temporären Zellen-Funknetzkennung, C-RNTI, eines der vorherigen Basisstation (102) zugeordneten Basisstationsschlüssels und/oder eines Integritätsschlüssels erzeugt wird.

6. Verfahren (800) nach einem der vorhergehenden Ansprüche, wobei:
das durch die Basisstation (105) erfolgende Empfangen (810) der Informationen von der vorherigen Basisstation (102), die der einen oder den mehreren Konfigurationen zugeordnet sind, die der Verbindung der UE (120) mit dem drahtlosen Kommunikationssystem (100) über die vorherige Basisstation (102) unter Nutzung der ersten RAT entsprechen, das Empfangen von mindestens einem von Folgendem durch die Basisstation (105) von der vorherigen Basisstation (102) einschließt: ein Schlüssel K_{BS1}, welcher der vorherigen Basisstation entspricht, ein Schlüssel K_{BS2}, welcher der Basisstation entspricht, oder ein Next-Hop-Chaining-Count-Wert; und
das Verfahren ferner Folgendes umfasst:
Ableiten des der Basisstation K_{BS2} entsprechenden Schlüssels durch die Basisstation (105) und auf der Grundlage von mindestens einem von dem Schlüssel K_{BS1}, welcher der vorherigen Basisstation entspricht, oder dem Next-Hop-Chaining-Count-Wert; und
Ableiten von mindestens einem von Folgendem: ein Integritätsschlüssel Kᵢₙₜ, ein Steuerungsebenendaten-Verschlüsselungsschlüssel K_{CPenc} oder ein Benutzerebenendaten-Verschlüsselungsschlüssel K_{UPenc}, und zwar durch die Basisstation (105) und auf der Grundlage von mindestens einem von dem Schlüssel K_{BS2}, welcher der Basisstation entspricht, oder dem Next-Hop-Chaining-Count-Wert.

7. Verfahren (800) nach Anspruch 6, wobei das Verfahren ferner mindestens eines von Folgendem umfasst:
Nutzen des Integritätsschlüssels Kᵢₙₜ, um die Integrität von Steuerungsebenendaten für die Übertragung von der Basisstation (105) zu der vorherigen Basisstation (102) zu schützen;
Nutzen des Steuerungsebenendaten-Verschlüsselungsschlüssels K_{CPenc}, um die integritätsgeschützten Steuerungsebenendaten für die Übertragung von der Basisstation (105) zu der vorherigen Basisstation (102) zu verschlüsseln;
Nutzen des Integritätsschlüssels Kᵢₙₜ, um die Integrität von Steuerungsebenendaten für die Übertragung von der Basisstation (105) zu der UE (120) zu schützen;
Nutzen des Steuerungsebenendaten-Verschlüsselungsschlüssels K_{CPenc}, um die integritätsgeschützten Steuerungsebenendaten für die Übertragung von der Basisstation (105) zu der UE (120) zu verschlüsseln;
Nutzen des Steuerungsebenendaten-Verschlüsselungsschlüssels K_{CPenc}, um Steuerungsebenendaten zu entschlüsseln, welche die Basisstation (105) von der UE (120) empfängt;
Nutzen des Integritätsschlüssels Kᵢₙₜ, um eine Integrität der entschlüsselten Steuerungsebenendaten zu prüfen, welche die Basisstation (105) von der UE (120) empfängt;
Nutzen des Steuerungsebenendaten-Verschlüsselungsschlüssels K_{CPenc}, um Steuerungsebenendaten zu entschlüsseln, welche die Basisstation (105) von der vorherigen Basisstation (102) empfängt;
Nutzen des Integritätsschlüssels Kᵢₙₜ, um eine Integrität der entschlüsselten Steuerungsebenendaten zu prüfen, welche die Basisstation (105) von der vorherigen Basisstation (102) empfängt;
Nutzen des Benutzerebenendaten-Verschlüsselungsschlüssels K_{UPenc}, um Benutzerebenendaten für die Übertragung von der Basisstation (105) zu der UE (120) zu verschlüsseln; oder
Nutzen des Benutzerebenendaten-Verschlüsselungsschlüssels K_{UPenc}, um Benutzerebenendaten für die Übertragung von der Basisstation (105) zu der UE (120) zu entschlüsseln.

8. Verfahren (800) nach einem der vorhergehenden Ansprüche, wobei das Erzeugen (812) durch die Basisstation (105) der einen oder mehreren Konfigurationen, die dem Wiederaufnehmen der unterbrochenen Verbindung zwischen der UE (120) und der Basisstation (105) unter Nutzung der zweiten RAT entsprechen, durch die Basisstation (105) erfolgendes Bestimmen mindestens einer NR-Konfiguration einschließt, die dem Wiederaufnehmen der unterbrochenen Verbindung zwischen der UE (120) und der Basisstation (105) unter Nutzung der zweiten RAT entspricht, wobei die Bestimmung auf mindestens einigen der angeforderten Informationen beruht, die in der Basisstation (105) von der vorherigen Basisstation (102) empfangen wurden.

9. Verfahren (800) nach einem der vorhergehenden Ansprüche, wobei das Übertragen (818) der Antwort auf die Anforderung der UE (120) zu der UE (120) das Übertragen von mindestens einem von Folgendem zu der UE (120) einschließt:
i) eine Angabe einer oder mehrerer EUTRA-Konfigurationen, wobei die eine oder die mehreren EUTRA-Konfigurationen mindestens eines von Folgendem einschließen: eine EUTRA-Funkressourcenkonfiguration, eine Fortsetzungskonfiguration für den EUTRA-Datenfunkträger, DRB, mit robuster Header-Komprimierung, ROHC, oder eine EUTRA-Messungskonfiguration; oder
ii) eine Angabe einer oder mehrerer NR-Konfigurationen, wobei die eine oder die mehreren NR-Konfigurationen mindestens eines von Folgendem einschließen: eine NR-Zellengruppenkonfiguration, eine NR-Messungskonfiguration oder eine NR-Funkträgerkonfiguration.

10. Verfahren (800) nach Anspruch 9, wobei:
das Übertragen (818) der Antwort auf die Anforderung der UE (120) zu der UE (120) das Übertragen der Angabe einer oder mehrerer EUTRA-Konfigurationen zu der UE (120) einschließt;
die Angabe einer oder mehrerer EUTRA-Konfigurationen die EUTRA-Funkressourcenkonfiguration einschließt; und
die EUTRA-Funkressourcenkonfiguration mindestens eines von Folgendem einschließt:
eine Konfiguration der Bitübertragungsschicht;
eine Konfiguration der Medienzugriffssteuerung;
eine erste Konfiguration des EUTRA-Signalisierungsfunkträgers, SRB, die optional eine erste Konfiguration der Funkverbindungssteuerung, RLC, einschließt, die einem EUTRA-SRB1 entspricht;
eine zweite EUTRA-SRB-Konfiguration, die optional eine zweite RLC-Konfiguration einschließt, die einem EUTRA-SRB2 entspricht; oder
eine EUTRA-DRB-Konfiguration, die optional eine RLC-Konfiguration einschließt, die einem EUTRA-DRB entspricht.

11. Verfahren (800) nach Anspruch 9 oder 10, wobei:
das Übertragen (818) der Antwort auf die Anforderung der UE (120) zu der UE (120) das Übertragen der Angabe einer oder mehrerer NR-Konfigurationen zu der UE (120) einschließt;
die Angabe einer oder mehrerer NR-Konfigurationen die NR-Zellengruppenkonfiguration einschließt; und
die NR-Zellengruppenkonfiguration mindestens eines von Folgendem einschließt:
eine Zellengruppenidentität;
eine Konfiguration der Bitübertragungsschicht;
eine Konfiguration der Medienzugriffssteuerung;
eine spezielle Zellenkonfiguration;
eine erste RLC-Trägerkonfiguration, die dem NR-SRB1 entspricht und optional eine Identifizierung desselben einschließt;
eine zweite RLC-Konfiguration, die dem NR-SRB2 entspricht und optional eine Identifizierung desselben einschließt; oder
eine dritte RLC-Konfiguration, die einem NR-DRB entspricht und optional eine Identifizierung desselben einschließt.

12. Verfahren (800) nach einem der vorhergehenden Ansprüche, wobei das durch die Basisstation (105) erfolgende Empfangen (810) der Informationen von der vorherigen Basisstation (102), die der einen oder den mehreren Konfigurationen zugeordnet sind, die der Verbindung der UE (120) mit dem drahtlosen Kommunikationssystem (100) über die vorherige Basisstation (102) unter Nutzung der ersten RAT entsprechen, das Empfangen durch die Basisstation (105) von der vorherigen Basisstation (102) mindestens eines von Folgendem einschließt:
einen aktuellen K_{BSx}-Schlüssel, der einer von der Basisstation (105) oder der vorherigen Basisstation (102) entspricht,
einen aktuellen K_{BSy}-Schlüssel, welcher der anderen von der Basisstation (105) oder der vorherigen Basisstation (102) entspricht;
einen aktuellen Integritätsschlüssel Kᵢₙₜ, der dem Integritätsschutzalgorithmus entspricht,
einen ROHC-Zustand,
eine C _RNTI, die in einer Quellen-persönlichen-Zelle, PCell, verwendet wird, die der vorherigen Basisstation (102) entspricht,
eine Zielzellenidentität der Quellen-PCell,
eine physische Zellenidentität der Quellen-PCell, oder
einen oder mehrere andere Konfigurationsparameter.

13. Verfahren (800) nach einem der vorhergehenden Ansprüche, ferner durch die Basisstation (105) erfolgendes Speichern der einen oder der mehreren Konfigurationen umfassend, die dem Wiederaufnehmen der unterbrochenen Verbindung der UE (120) mit dem drahtlosen Kommunikationssystem (100) über die Basisstation (105) unter Nutzung der zweiten RAT entsprechen, in einer Instanz eines der UE (120) entsprechenden Access Stratums, auf die durch die Basisstation (105) zugegriffen werden kann.

14. Verfahren (800) nach einem der vorhergehenden Ansprüche, ferner umfassend:
durch die Basisstation (105) von der UE (120) erfolgendes Empfangen (818) einer Angabe einer Wiederaufnahme der unterbrochenen Verbindung zwischen der UE (120) und dem drahtlosen Kommunikationssystem (100) über die Basisstation (105); und
auf dem Empfang der Angabe der Wiederaufnahme der unterbrochenen Verbindung der UE (120) mit dem drahtlosen Kommunikationssystem (100) über die Basisstation (105) beruhendes Übertragen (820) einer Angabe der wiederaufgenommenen Verbindung der UE (120) mit dem drahtlosen Kommunikationssystem (100) über die Basisstation (105) durch die Basisstation (105) zu einer Mobilitätsmanagerkomponente eines mit der Basisstation (105) verbundenen Kernnetzes, und
optional umfasst das Verfahren ferner das Übertragen (822) einer Angabe durch die Basisstation (105) zu der vorherigen Basisstation (102), um mit den Informationen, die der Verbindung der UE (120) mit dem drahtlosen Kommunikationssystem (100) über die vorherige Basisstation (102) unter Nutzung der ersten RAT entsprechen, mindestens eines von Folgendem zu tun: freigeben, leeren oder löschen.

15. System, dafür konfiguriert, ein Verfahren nach einem der vorhergehenden Ansprüche durchzuführen.

## Revendications

1. Procédé (800) dans une station de base (105) d'un système de communication sans fil (100), laquelle utilise une deuxième technologie d'accès radio, RAT, le procédé comprenant les étapes consistant à :
recevoir (802), par la station de base (105), une demande d'un équipement utilisateur (120), UE, de reprise d'une connexion suspendue de l'UE (120) avec le système de communication sans fil (100) *via* la station de base (105), la demande de l'UE (120) incluant un code d'authentification de message de reprise généré par l'UE (120) sur la base d'une identité de cellule de la station de base (105) et d'un algorithme de protection de l'intégrité configuré par une station de base précédente (102) qui a précédemment assuré la connexion de l'UE (120) avec le système de communication sans fil (100) en utilisant un premier RAT ;
déterminer (805), par la station de base (105) et sur la base d'informations incluses dans la demande de l'UE (120) de reprendre la connexion suspendue, une identité de la station de base précédente (102) ;
transmettre (808), par la station de base (105) à la station de base précédente (102), une demande d'informations correspondant à la connexion de l'UE (120) avec le système de communication sans fil (100) *via* la station de base précédente (102) utilisant le premier RAT, la demande d'informations incluant le code d'authentification du message de reprise ;
recevoir (810), par la station de base (105) de la station de base précédente (102), des informations associées aux une ou plusieurs configurations correspondant à la connexion de l'UE (120) avec le système de communication sans fil (100) *via* la station de base précédente (102) utilisant le premier RAT, les informations reçues incluant une indication d'au moins une parmi : une configuration de support radio de signalisation, une configuration de support radio de données, une configuration de ressource radio ou d'une configuration de mesure ;
générer (812), par la station de base (105) et sur la base des informations reçues de la station de base précédente (102), une ou plusieurs configurations correspondant à la reprise de la connexion suspendue de l'UE (120) avec le système de communication sans fil (100) par l'intermédiaire de la station de base (105) utilisant le deuxième RAT ; et
transmettre (818), par la station de base (105) à l'UE (120), une réponse à la demande de l'UE (120), la réponse indiquant les une ou plusieurs configurations.

2. Procédé (800) selon la revendication 1, dans lequel la station de base (105) se connecte à un réseau central (108), CN, et la station de base précédente (102) se connecte au CN (108).

3. Procédé (800) selon la revendication 2, dans lequel le CN (108) est un réseau central 5GC, le premier RAT est l'une de la nouvelle radio, NR, ou de l'accès radio terrestre universel évolué, EUTRA, et le deuxième RAT est l'autre de la NR ou de l'EUTRA.

4. Procédé (800) selon la revendication 3, dans lequel soit :
le deuxième RAT est EUTRA et la demande de l'UE (120) de reprendre la connexion suspendue est un message *RRCConnectionResumeRequest* ; ou
le deuxième RAT est NR et la demande de l'UE (120) de reprendre la connexion suspendue est un message *RRCResumeRequest.*

5. Procédé (800) selon l'une quelconque des revendications précédentes, dans lequel le code d'authentification du message de reprise est généré par l'UE (120) en outre sur la base de l'identité de la station de base précédente (102), d'un identifiant temporaire de réseau radio cellulaire, C-RNTI, reçu par l'UE (120) de la station de base précédente (102), d'une clé de station de base associée à la station de base précédente (102), et/ou d'une clé d'intégrité.

6. Procédé (800) selon l'une quelconque des revendications précédentes, dans lequel :
la réception (810), par la station de base (105) de la station de base précédente (102), des informations associées aux une ou plusieurs configurations correspondant à la connexion de l'UE (120) avec le système de communication sans fil (100) *via* la station de base précédente (102) utilisant le premier RAT inclut la réception, par la station de base (105) de la station de base précédente (102), d'au moins l'une parmi : une clé correspondant à la station de base précédente K_{BS1}, une clé correspondant à la station de base K_{BS2}, ou une valeur de comptage de chaînage de sauts suivants ; et
le procédé comprend en outre les étapes consistant à :
dériver, par la station de base (105) et sur la base d'au moins l'une des clés correspondant à la station de base précédente K_{BS1} ou de la valeur de chaînage de comptage de sauts suivants, la clé correspondant à la station de base K_{BS2} ; et
dériver, par la station de base (105) et sur la base d'au moins l'une des clés correspondant à la station de base K_{BS2} ou de la valeur de la chaîne de comptage du saut suivant, au moins l'une parmi : une clé d'intégrité Kᵢₙₜ, une clé de chiffrement des données du plan de contrôle K_{CPenc}, ou une clé de chiffrement des données du plan de l'utilisateur K_{UPenc}.

7. Procédé (800) selon la revendication 6, dans lequel le procédé comprend en outre au moins l'une des étapes suivantes consistant à :
utiliser la clé d'intégrité Kᵢₙₜ pour protéger l'intégrité de données du plan de contrôle à transmettre de la station de base (105) à la station de base précédente (102) ;
utiliser la clé de chiffrement des données du plan de contrôle K_{CPenc} pour chiffrer les données du plan de contrôle à intégrité protégée en vue de leur transmission de la station de base (105) à la station de base précédente (102) ;
utiliser la clé d'intégrité Kᵢₙₜ pour protéger l'intégrité des données du plan de contrôle à transmettre de la station de base (105) à l'UE (120) ;
utiliser la clé de chiffrement des données du plan de contrôle K_{CPenc} pour chiffrer les données du plan de contrôle à intégrité protégée en vue de leur transmission de la station de base (105) à l'UE (120) ;
utiliser la clé de chiffrement des données du plan de contrôle K_{CPenc} pour déchiffrer des données du plan de contrôle que la station de base (105) reçoit de l'UE (120) ;
utiliser la clé d'intégrité Kᵢₙₜ pour vérifier l'intégrité des données déchiffrées du plan de contrôle que la station de base (105) reçoit de l'UE (120) ;
utiliser la clé de chiffrement des données du plan de contrôle K_{CPenc} pour déchiffrer les données du plan de contrôle que la station de base (105) reçoit de la station de base précédente (102) ;
utiliser la clé d'intégrité Kᵢₙₜ pour vérifier une intégrité des données déchiffrées du plan de contrôle que la station de base (105) reçoit de la station de base précédente (102) ;
utiliser la clé de chiffrement des données du plan de l'utilisateur K_{UPenc} pour chiffrer des données du plan de l'utilisateur à transmettre de la station de base (105) à l'UE (120) ; ou
utiliser la clé de chiffrement des données du plan de l'utilisateur K_{UPenc} pour déchiffrer des données du plan de l'utilisateur à transmettre de la station de base (105) à l'UE (120).

8. Procédé (800) selon l'une quelconque des revendications précédentes, dans lequel la génération (812), par la station de base (105), des une ou plusieurs configurations correspondant à la reprise de la connexion suspendue entre l'UE (120) et la station de base (105) utilisant le deuxième RAT inclut la détermination, par la station de base (105), d'au moins une configuration NR correspondant à la reprise de la connexion suspendue entre l'UE (120) et la station de base (105) utilisant la deuxième RAT, la détermination étant basée sur au moins une partie des informations demandées reçues à la station de base (105) en provenance de la station de base précédente (102).

9. Procédé (800) selon l'une quelconque des revendications précédentes, dans lequel la transmission (818), à l'UE (120), de la réponse à la demande de l'UE (120) inclut la transmission, à l'UE (120), d'au moins l'un parmi :
i) une indication d'une ou plusieurs configurations EUTRA, les une ou plusieurs configurations EUTRA incluant au moins l'une parmi : une configuration de ressources radio EUTRA, une configuration continue de support radio de données, DRB, EUTRA de compression d'en-tête robuste ROHC, ou une configuration de mesure EUTRA ; ou
ii) une indication d'une ou plusieurs configurations NR, les une ou plusieurs configurations NR incluant au moins l'une parmi : une configuration de groupe de cellules NR, une configuration de mesure NR ou une configuration de support radio NR.

10. Procédé (800) selon la revendication 9, dans lequel :
le fait de transmettre (818), à l'UE (120), la réponse à la demande de l'UE (120) inclut la transmission de l'indication d'une ou plusieurs configurations EUTRA à l'UE (120) ;
l'indication d'une ou plusieurs configurations EUTRA inclut la configuration des ressources radio EUTRA ; et
la configuration des ressources radio EUTRA inclut au moins l'une parmi :
une configuration de la couche physique ;
une configuration de contrôle d'accès de support ;
une première configuration de support radio de signalisation, SRB, EUTRA qui inclut optionnellement une première configuration de contrôle de liaison radio, RLC, correspondant à un SRB 1 EUTRA ;
une deuxième configuration EUTRA SRB qui inclut optionnellement une deuxième configuration RLC correspondant à une EUTRA SRB2 ; ou
une configuration DRB EUTRA qui inclut optionnellement une configuration RLC correspondant à un DRB EUTRA.

11. Procédé (800) selon la revendication 9 ou 10, dans lequel :
le fait de transmettre (818) à l'UE (120), la réponse à la demande de l'UE (120) inclut la transmission de l'indication d'une ou plusieurs configurations NR à l'UE (120) ;
l'indication d'une ou plusieurs configurations NR inclut la configuration du groupe de cellules NR ; et
la configuration du groupe de cellules NR inclut au moins l'une parmi :
une identité de groupe cellulaire ;
une configuration de la couche physique ;
une configuration de contrôle d'accès de support ;
une configuration cellulaire particulière ;
une première configuration de support RLC correspondant à NR SRB 1 et incluant optionnellement une identification de celle-ci ;
une deuxième configuration RLC correspondant à la NR SRB2 et incluant optionnellement une identification de celle-ci ; ou
une troisième configuration RLC correspondant à une DRB NR et incluant optionnellement une identification de celle-ci.

12. Procédé (800) selon l'une quelconque des revendications précédentes, dans lequel la réception (810), par la station de base (105) de la station de base précédente (102), des informations associées aux une ou plusieurs configurations correspondant à la connexion de l'UE (120) avec le système de communication sans fil (100) *via* la station de base précédente (102) utilisant le premier RAT inclut la réception par la station de base (105) de la station de base précédente (102), d'au moins l'un parmi :
une clé K_{BSx} actuelle correspondant l'une parmi la station de base (105) ou la station de base précédente (102),
une clé K_{BSy} actuelle correspondant à l'autre parmi la station de base (105) ou la station de base précédente (102) ;
une clé d'intégrité actuelle Kᵢₙₜ correspondant à l'algorithme de protection de l'intégrité,
un état ROHC,
un C_RNTI utilisé dans une cellule personnelle source, PCell, correspondant à la station de base précédente (102),
l'identité de la cellule cible de la source PCell,
l'identité physique de la source PCell, ou
un ou plusieurs autres paramètres de configuration.

13. Procédé (800) selon l'une quelconque des revendications précédentes, comprenant en outre le stockage, par la station de base (105), des une ou plusieurs configurations correspondant à la reprise de la connexion suspendue de l'UE (120) avec le système de communication sans fil (100) *via* la station de base (105) utilisant le deuxième RAT dans une instance d'une strate d'accès correspondant à l'UE (120) qui est accessible à la station de base (105).

14. Procédé (800) selon l'une quelconque des revendications précédentes, comprenant en outre les étapes consistant à :
recevoir (818), par la station de base (105) de l'UE (120), une indication de reprise de la connexion suspendue entre l'UE (120) et le système de communication sans fil (100) par l'intermédiaire de la station de base (105) ; et
sur la base de la réception de l'indication de la reprise de la connexion suspendue de l'UE (120) avec le système de communication sans fil (100) *via* la station de base (105), transmettre (820), par la station de base (105) à un composant de gestion de la mobilité d'un réseau central connecté à la station de base (105), une indication de la reprise de la connexion de l'UE (120) avec le système de communication sans fil (100) *via* la station de base (105), et
optionnellement, le procédé comprend en outre la transmission (822), par la station de base (105) à la station de base précédente (102), d'une indication permettant au moins un parmi le fait de libérer, d'effacer ou de supprimer les informations correspondant à la connexion de l'UE (120) avec le système de communication sans fil (100) *via* la station de base précédente (102) utilisant le premier RAT.

15. Système configuré pour exécuter un procédé selon l'une quelconque des revendications précédentes.
